# EUROPEAN PATENT SPECIFICATION

(11) **EP 2 211 068 B1**
(45) Date of publication and mention of the grant of the patent: **05.11.2014**
(21) Application number: 10151237.4
(22) Date of filing: 20.01.2010
(51) Int. Cl.: F16D 13/52, F16D 13/75, F16D 13/56

(54) **Clutch for automatically adjusting play amount and vehicle including the same**
Kupplung zur automatischen Einstellung des Spielumfangs und Fahrzeug, das diese Kupplung enthält
Embrayage pour le réglage automatique de la quantité de jeu et véhicule l'incluant

(30) Priority: 21.01.2009 JP 2009011430
(43) Date of publication of application: 28.07.2010
(73) Proprietor: Yamaha Hatsudoki Kabushiki Kaisha, Shizuoka-ken Shizuoka 438-8501 (JP)
(72) Inventor: Ishida, Yousuke, Shizuoka-ken Shizuoka 438-8501 (JP)
(74) Representative: Stöckeler, Ferdinand

(56) References cited:
- EP-A1- 1 972 819
- DE-A1-102007 031 740
- FR-A1- 2 913 471
- GB-A- 1 478 920
- US-A- 3 176 814
- US-A1- 2008 029 332

## Description

### BACKGROUND OF THE INVENTION

### Field of the Invention

The present invention relates to a clutch for automatically adjusting a play amount and a vehicle including the same.

### Description of the Prior Art

Friction clutches have been often used in vehicles or the like as a device that engages and disengages transmission of engine driving force to a driving wheel.

A clutch disclosed by JP 7-190086 A includes a friction plate, a clutch plate, a pressure plate arranged to have the friction plate and the clutch plate pressed against each other upon receiving the pushing force of the clutch spring, and clutch disconnecting means arranged to move the pressure plate against the pushing force of the clutch spring so that the friction plate and the clutch plate are parted from each other. The clutch disconnecting means has a release shaft arranged to pull the pressure plate against the pushing force of the clutch spring and a lever arranged to rotate the release shaft. Another example is given in US 2008/0029332 A1.

The lever is provided to cause the friction plate and the clutch plate to be parted in a prescribed rotation position (hereinafter referred to as the touch point). More specifically, when the lever rotates beyond the touch point, the clutch is disconnected.

### SUMMARY OF THE INVENTION

In the clutch, the touch point is shifted by thermal expansion caused by temperature increase, and a predetermined play amount is changed. The touch point can be shifted by the wear of the friction plate or the clutch plate.

It is an object of embodiments of the present invention to provide a clutch capable of automatically adjusting the play amount and a vehicle including the same.

A clutch according to an embodiment of the present invention has a connected state and a disconnected state. The clutch includes a main shaft, a friction plate, a clutch plate, a rod, a pressure plate, a clutch spring, and an automatic play adjusting mechanism. The main shaft is arranged along a clutch axial direction. The friction plate is rotatably supported around the main shaft to rotate according to the rotation of a crankshaft. The clutch plate is supported around the main shaft and opposed to the friction plate to rotate together with the main shaft. The rod is arranged along the clutch axial direction and arranged to be moved to one side in the clutch axial direction in the disconnected state. The pressure plate is rotatably supported around the rod. The clutch spring is arranged to push the pressure plate to the other side in the clutch axial direction so that the friction plate and the clutch plate are rubbed against each other. The automatic play adjusting mechanism is provided between the pressure plate and the rod to allow the pressure plate to move relative to the rod in the clutch axial direction in the connected state and restrict the movement of the pressure plate relative to the rod in the clutch axial direction in the disconnected state. In this way, according to the embodiments of the present invention, the shift of the touch point caused by the thermal expansion or wear is reduced, and the play amount is adjusted automatically.

Other features, elements, steps, characteristics and advantages of the present invention will become more apparent from the following detailed description of embodiments of the present invention with reference to the attached drawings.

### BRIEF DESCRIPTION OF THE DRAWINGS

Fig. 1 is a side view of a motorcycle including a clutch according to an embodiment of the present invention.
Fig. 2 is a sectional view of the inside structure of a power unit shown in Fig. 1.
Fig. 3 is a sectional view of a clutch according to a first embodiment of the present invention.
Fig. 4 is a partly enlarged view of Fig. 3 and a sectional view of an automatic play adjusting mechanism.
Fig. 5A is a front view of a pull rode according to the first embodiment.
Fig. 5B is a sectional view taken along line VB-VB in Fig. 5A.
Fig. 6A is a front view of an outer pipe according to the first embodiment.
Fig. 6B is a sectional view taken along line VIB-VIB in Fig. 5A.
Fig. 7A is a front view of an inner pipe according to the first embodiment.
Fig. 7B is a sectional view taken along line VIIB-VIIB in Fig. 7A.
Fig. 8A is a front view of an auxiliary spring according to the first embodiment.
Fig. 8B is a sectional view taken along line VIIIB-VIIIB in Fig. 8A.
Fig. 9A is a front view of a slide plate according to the first embodiment.
Fig. 9B is a sectional view taken along line IXB-IXB in Fig. 9A.
Fig. 10A is a front view of an auxiliary spring according to the first embodiment.
Fig. 10B is a sectional view taken along line XB-XB in Fig. 10A.
Fig. 11A is a front view of a lock plate according to the first embodiment.
Fig. 11B is a sectional view taken along line XIB-XIB in Fig. 11A.
Figs. 12A to 12C are views showing the operation of the automatic play adjusting mechanism according to the first embodiment, Fig. 12A is a sectional view of a clutch connected state, Fig. 12B is a sectional view in a touch point, and Fig. 12C is a sectional view of a clutch disconnected state.
Fig. 13 is a sectional view of a clutch and a clutch release mechanism according to a second embodiment of the present invention.
Fig. 14 is a sectional view of the clutch according to the second embodiment.
Fig. 15A is a front view of a collar according to the second embodiment.
Fig. 15B is a sectional view taken along line XVB-XVB in Fig. 15A.
Fig. 16A is a front view of a slide plate according to the second embodiment.
Fig. 16B is a sectional view taken along line XVIB-XVIB in Fig. 16A.
Fig. 17A is a front view of an annular plate according to the second embodiment.
Fig. 17B is a sectional view taken along line XVIIB-XVIIB in Fig. 17A.
Fig. 18A is a front view of an auxiliary spring according to the second embodiment.
Fig. 18B is a sectional view taken along line XVIIIB- XVIIIB in Fig. 18A.
Fig. 19A is a front view of an auxiliary spring according to the second embodiment.
Fig. 19B is a sectional view taken along line XIXB- XIXB in Fig. 19A.
Fig. 20A is a front view of an inner pipe according to the second embodiment.
Fig. 20B is a sectional view taken along line XXB-XXB in Fig. 20A.
Fig. 21A is a front view of an outer pipe according to the second embodiment.
Fig. 21B is a sectional view taken along line XXIB-XXIB in Fig. 21A.
Fig. 22A is a front view of a lock plate according to the second embodiment.
Fig. 22B is a sectional view taken along line XXIIBB-XXIIBB in Fig. 22A.
Fig. 23A is a front view of a slide plate according to the second embodiment.
Fig. 23B is a sectional view taken along line XXIIIB-XXIIIB in Fig. 23A.
Fig. 24A is a front view of a push rod according to the second embodiment.
Fig. 24B is a sectional view taken along line XXIVB-XXIVB in Fig. 24A.
Fig. 24C is a sectional view taken along line XXIVC-XXIVC in Fig. 24A.
Fig. 25 is a sectional view of a clutch, a clutch release mechanism, and a ball cam according to a third embodiment of the present invention.
Fig. 26 is a sectional view of the clutch and the ball cam according to the third embodiment.
Fig. 27 is a partly enlarged view of Fig. 26 and a sectional view of an automatic play adjusting mechanism.
Fig. 28 is a sectional view of the ball cam according to the third embodiment in a clutch connected state.
Fig. 29 is a sectional view of the ball cam according to the third embodiment.
Fig. 30A is a front view of a slid shaft according to the third embodiment.
Fig. 30B is a sectional view taken along line XXXB-XXXB in Fig. 30A.
Fig. 30C is a sectional view taken along line XXXC-XXXC in Fig. 30A.
Fig. 31A is a front view of a collar according to a third embodiment of the present invention.
Fig. 31B is a sectional view taken along line XXXIB-XXXIB in Fig. 31A.

### DETAILED DESCRIPTION OF THE EMBODIMENTS

An embodiment of the present invention will be described in detail in conjunction with the accompanying drawings in which the same or corresponding elements are designated by the same reference characters and their description will not be repeated.

### First Embodiment

Now, a motorcycle 1 including a friction clutch according to an embodiment of the present invention will be described in detail in conjunction with the accompanying drawings. Note that the motorcycle 1 and the clutch 44 in the following description are simply an example of the embodiment of the invention. The vehicle according to the present invention is not limited to the motorcycle 1 that will be described in the following. The vehicle according to the present invention may be a saddle riding type vehicle on which a rider striding over a seat such as an ATV (All Terrain Vehicle) and a snowmobile in addition to the vehicle such as a motorcycle, a moped (motorized bicycle), and a scooter. In the specification, the motorcycle refers to a vehicle whose body may be inclined while it turns around. The motorcycle herein is not limited to a two-wheel vehicle, and the number of wheels may be three or more. The vehicle may be a four-wheel vehicle.

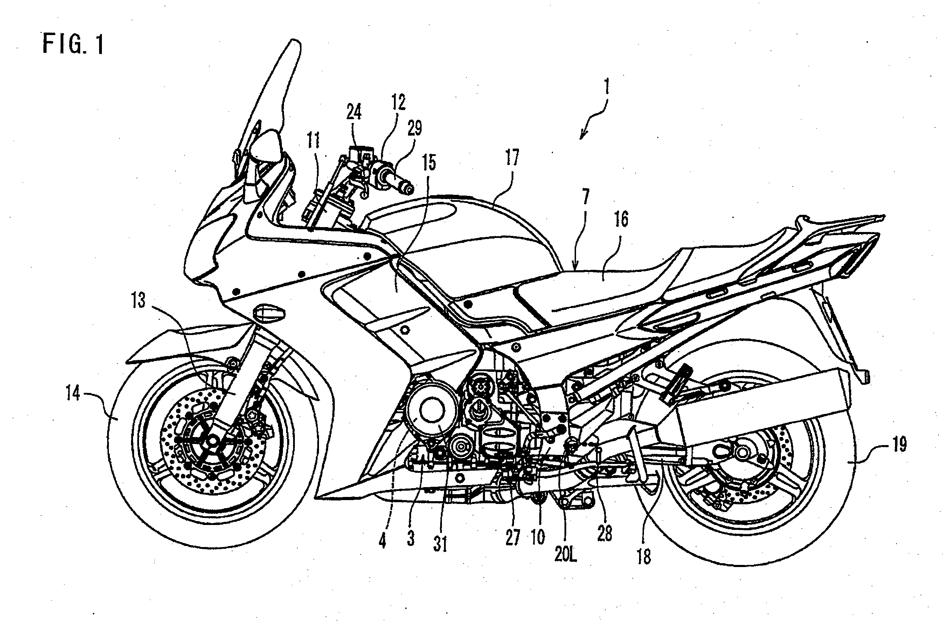

Fig. 1 is a left side view of the motorcycle 1. In the following description, the directions such as the front, back, left, and right indicate these directions viewed from a rider seated on a seat 16.

### Structure of Motorcycle

As shown in Fig. 1, the motorcycle 1 includes a vehicle main body 7, a front wheel 14 provided on the front side of the vehicle main body 7, and a rear wheel 19 provided on the rear side of the vehicle main body 7.

The vehicle main body 7 includes a body frame 10. The body frame 10 has a head pipe 11. A handle 12 is attached at the upper end of the head pipe 11. The front wheel 14 is rotatably provided through a front fork 13 under the head pipe 11.

The body frame 10 has a power unit suspended therefrom. The body frame 10 is provided with a body cover 15. The seat 16 is provided on the rear side substantially from the center of the vehicle main body 7. A fuel tank 17 is provided in front of the seat 16.

A rear arm 18 is swingably supported at the body frame 10. A rear wheel 19 is rotatably attached at the rear end of the rear arm 18. The rear arm 19 is coupled to an engine 4 through a power transmission mechanism that is not shown. In this way, the power of the engine 4 is transmitted to the rear wheel 19 and the rear wheel 19 rotates.

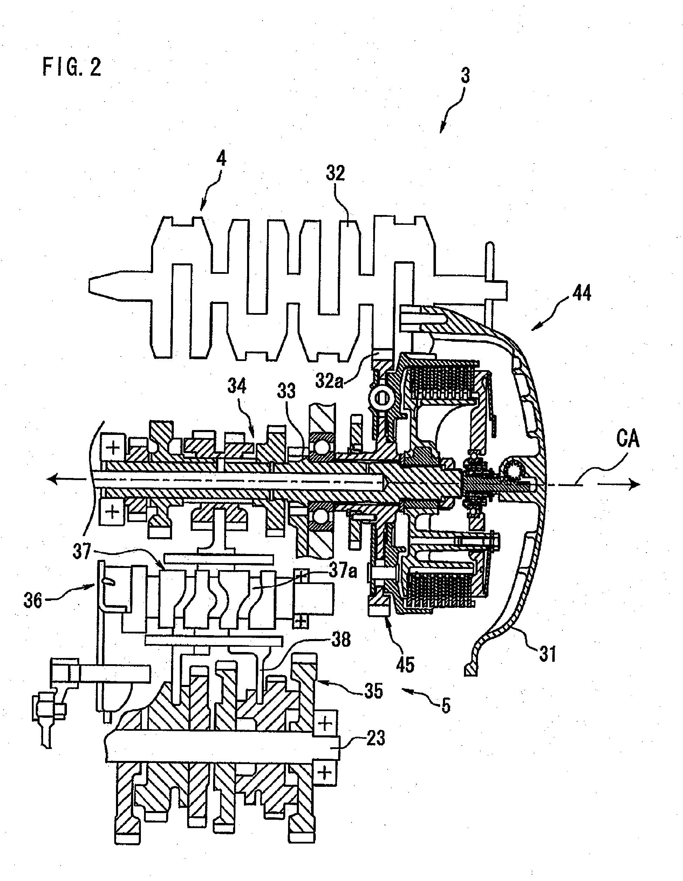

An accelerator grip (not shown) is provided on the right side of the handle 12. A left side grip 29 is provided on the left side of the handle 12. A clutch lever 24 is provided on the left side of the handle 12. The clutch lever 24 is provided in front of the left side grip 29. A clutch 44 (Fig. 2) is disconnected based on the operation of the clutch lever 24. When operated by a rider, the clutch lever 24 is rotated in a prescribed direction.

Footrests 20L are provided on the left and right sides of the vehicle main body 7 in the center in the front-back direction. A shift pedal 27 is provided on the left side of the vehicle main body 7 in front of the left foot rest 20L. A transmission device 5 (Fig. 2) has its transmission gear ratio changed based on the operation of the shift pedal 27. A side stand 28 is provided on the left side of the vehicle main body 7 and under the shift pedal 27 and the foot rest 20L.

### Structure of Power Unit

Now, referring to Fig. 2, main elements of a power unit 3 will be described. As shown in Fig. 2, the power unit 3 includes the engine 4, the transmission device 5, and the clutch 44. The engine 4 is a water cooling type 4-cycle engine according to the present embodiment while the kind of the engine 4 is not particularly limited.

Although not shown, the engine 4 has a crankshaft 32 that extends in the vehicle widthwise direction. The power unit 3 has a crankcase 31 at its outer side.

As shown in Fig. 2, the crankshaft 32 is connected to the transmission device 5 through the clutch 44. The transmission device 5 includes a main shaft 33, a drive shaft 23, and a gear selecting mechanism 36. The main shaft 33 is connected to the crankshaft 32 through the clutch 44. The main shaft 33 and the drive shaft 23 are provided parallel to the crankshaft 32. The main shaft 33 is provided in the clutch axial direction CA.

Multiple transmission gears 34 are mounted at the main shaft 33. Multiple transmission gears 35 corresponding to the multiple transmission gears 34 are provided at the drive shaft 23. The multiple transmission gears 34 and the multiple transmission gears 35 are engaged with one another only between a pair of selected gears. The transmission gears 34 other than the selected transmission gear 34 or the transmission gears 35 other than the selected transmission gear 35 can rotate around the main shaft 33 or the drive shaft 23. More specifically, the unselected gears 34 or the unselected gears 35 are made to idle around the main shaft 33 or the drive shaft 23. More specifically, the rotation transmission between the main shaft 33 and the drive shaft 23 is carried out only through the selected transmission gears 34 and 35 that are engaged with each other.

The transmission gears 34 and 35 are selected by a gear selection mechanism 36. More specifically, the transmission gears 34 and 35 are selected by a shift cam 37 in the gear selecting mechanism 36. A plurality of cam grooves 37a are provided at the outer circumferential surface of the shift cam 37. A shift fork 38 is provided in each of the cam grooves 37a. The shift forks 38 are engaged with prescribed transmission gears 34 and 35 of the main shaft 33 and the drive shaft 23. The rotation of the shift cam 37 causes the plurality of shift forks 38 to be guided into the cam grooves 37 and moved in the axial direction of the main shaft 33. In this way, gears to be engaged with each other are selected among the transmission gears 34 and 35. More specifically, among the plurality of transmission gears 34 and 35, only a pair of gears in a position corresponding to the rotation angle of the shift cam 37 is fixed by spline to the main shaft 33 and the drive shaft 23. This allows the transmission gear position of the transmission device 5 to be determined and rotation is transmitted between the main shaft 33 and the drive shaft 23 at a prescribed transmission gear ratio through the transmission gears 34 and 35. The gear selecting mechanism 36 is operated by the shift pedal 27 shown in Fig. 1. The operation of the shift pedal 27 rotates the shift cam 37 in a prescribed direction.

In this way, a prescribed pair of transmission gears 34 and 35 is fixed to the main shaft 33 and the drive shaft 23, the clutch 44 is connected, and the engine 4 is driven, so that the power of the engine 4 is transmitted to the main shaft 33 through the clutch 44. The rotation is transmitted between the main shaft 33 and the drive shaft 23 through the prescribed pair of transmission gears 34 and 35 at a prescribed transmission gear ratio, so that the drive shaft 23 is driven. When the drive shaft 23 is driven, a transmission mechanism (not shown) such as a chain that connects the drive shaft 23 and the rear wheel 19 transmits the driving power, so that the rear wheel 19 is rotated. The power transmission mechanism that connects the engine 4 and the rear wheel 19 includes at least the clutch 44, the transmission device 5, and the transmission mechanism (not shown) such as a chain.

### Structure of Clutch

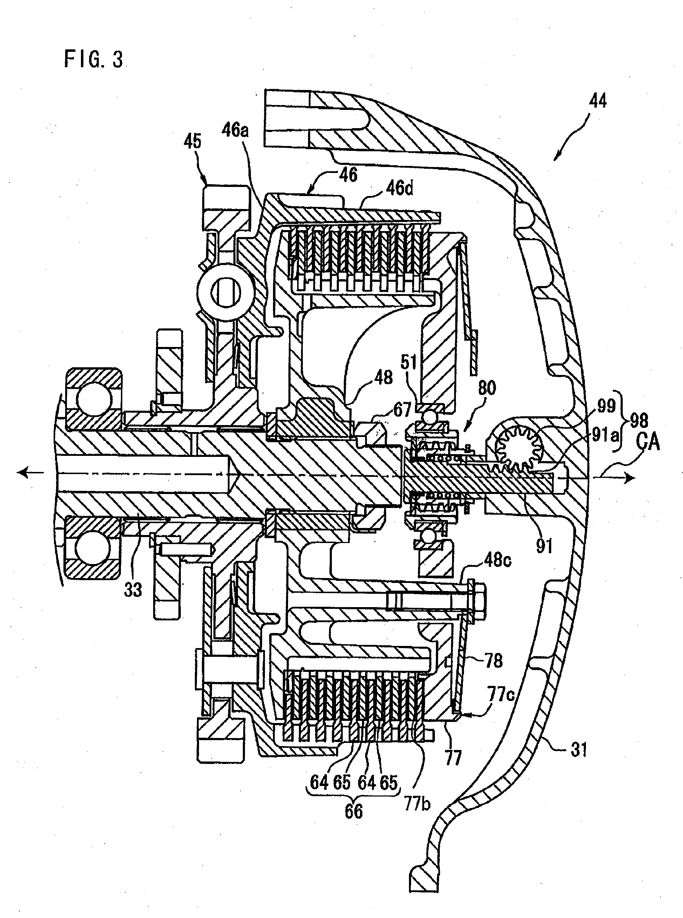

As shown in Fig. 2 or 3, the clutch 44 according to the present embodiment is a wet type multi-plate friction clutch. However, the clutch 44 may be a dry type friction clutch or a single plate friction clutch. The clutch 44 includes a clutch housing 46, a clutch boss 48, and a pressure plate 77.

As shown in Fig. 2 or 3, the vehicle width direction is the same as the right-left direction. According to the present embodiment, the clutch 44 is provided on the right side of the main shaft 33.

### Clutch Housing 46

As shown in Fig. 3, the clutch 44 includes the clutch housing 46.
The main shaft 33 is penetrated through the clutch housing 46. The clutch housing 46 having a bottom portion 46a is approximately cylinder shaped. The bottom portion 46a has the main shaft 33 inserted therethrough. The clutch housing 46 is provided with a plurality of arms 46d. The arms 46d each extend to the right from the bottom portion 46a.

### Gear 45

The clutch housing 46 is provided with a gear 45. The gear 45 is engaged with the gear 32a (Fig. 2) of the crankshaft 32. The gear 45 is also fixed to the bottom portion 46a of the clutch housing 46 so that it cannot rotate relative to the bottom portion. Therefore, as the crankshaft 32 rotates, the gear 45 and the clutch housing 46 rotate together. In this way, torque from the crankshaft 32 is transmitted to the clutch housing 46 through the gears 32a and 45.

The gear 45 and the main shaft 33 can rotate relative to each other.
The gear 45 is rotatable around the main shaft 33 and the rotation of the gear 45 is not directly transmitted to the main shaft 33.

### Clutch Boss 48

The clutch boss 48 is fixed by a nut 67 at the main shaft 33 so that it cannot rotate. The clutch boss 48 rotates together with the main shaft 33.

### Plate Group 66

A plurality of friction plates 64 are provided inside the clutch housing 46. The friction plates 64 are each fixed to the clutch housing 46 and supported rotatably around the main shaft 33. In this way, the plurality of friction plates 64 rotate together with the clutch housing 46. The friction plates 64 are each displaceable in the clutch axial direction CA. Therefore, the distance between adjacent friction plates 64 is variable.

The plurality of friction plates 64 are arranged in the clutch axial direction CA. A clutch plate 65 is provided between adjacent friction plates 64. The clutch plates 65 are opposed to adjacent friction plates 64. The clutch plates 65 are each fixed to the clutch boss 48 and supported by the main shaft 33. In this way, the plurality of clutch plates 65 rotate together with the clutch boss 48. The clutch plates 65 are each displaceable in the clutch axial direction CA. Therefore, the distance between adjacent clutch plates 65 is variable.

According to the present embodiment, the plurality of friction plates 64 and the plurality of clutch plates 65 form the plate group 66.

### Pressure Plate 77

The pressure plate 77 is provided on the right side of the main shaft 33. The pressure plate 77 has an approximately circular disk shape. The pressure plate 77 has a pressurizing portion 77b arranged to project to the side of the plate group 66 on the inner side of the outer circumference. The pressurizing portion 77b is opposed to the friction plate 64 in the rightmost position in the plate group 66. However, the clutch plate 65 may be provided on the rightmost side of the plate group 66. When the pressure plate 77 moves to the left, the pressurizing portion 77b pushes the plate group 66 to the left. As a result, the friction plates 64 and the clutch plates 65 in the plate group 66 are rubbed against one another.

On the other hand, a retainer 77c is formed on the outside side of the outer extension of the pressure plate 77. A plurality of cylindrical guides 48c that extend in the clutch axial direction CA are provided at the inner side of the tubular clutch boss 48. The guides 48c are each provided integrally with the clutch boss 48.

One end of a clutch spring 78 that is a coned disk spring is attached to the guide 48c. The other end of the clutch spring 78 is attached to the retainer 77c of the pressure plate 77. More specifically, the clutch spring 78 has an approximately annular shape. In this way, the clutch spring 78 pushes the pressure plate 77 to the left in Fig. 3. In other words, the clutch spring 78 pushes the pressure plate 77 to connect the clutch 44.

The pressure plate 77 is pushed by the clutch spring 78 and moves to the left in Fig. 3 in the clutch axial direction CA when the clutch 44 is connected. Upon receiving the pushing force of the clutch spring 78, the pressure plate 77 has the plate group 66 rubbed against one another. In this way, friction force is generated between the friction plates 64 and the clutch plates 65, so that the driving force of the engine 4 is transmitted from the clutch housing 46 to the clutch boss 48. The state of the clutch 44 at the time is a connected state. More specifically, when the clutch 44 is connected, the clutch boss 48 rotates together with the clutch housing 46.

On the other hand, when the clutch 44 is disconnected, a pull rod 91 moves to the right in Fig. 3, and the pressure plate 77 also moves to the right in Fig. 3 against the pushing force of the clutch spring 78. As a result, the state in which the friction plates 64 and the clutch plates 65 are rubbed against each other is over, so that the friction plates 64 and the clutch plates 65 are parted from each other. In this way, the driving force of the engine 4 is no longer transmitted from the clutch housing 46 to the clutch boss 48. The state of the clutch 44 at the time is a disconnected state.

When the clutch lever 24 shown in Fig. 1 is operated by a rider, the pull rod 91 moves to the right. A rack 91a is formed at the right part of the pull rod 91. The rack 91a is engaged with a pinion 99. In this way, when the clutch lever 24 is operated, the pinion 99 rotates and the pull rod 91 moves to the right.

When the clutch 44 is switched from a disconnected state to a connected state, the pressure plate 77 moves to the left by the pushing force of the clutch spring 78. At the time, the pull rod 91 moves to the left based on the movement of the pressure plate 77. The pinion 99 and the rack 91a form a clutch release mechanism 98.

### Automatic Play Adjusting Mechanism

The clutch 44 includes an automatic play adjusting mechanism 80.
The automatic play adjusting mechanism 80 reduces the shift of the touch point caused by the thermal expansion or wear of the plate group 66 and automatically adjusts a play amount. The touch point is a prescribed rotation position for the clutch lever 24 when the friction plates 64 and the clutch plates 65 start to be parted from one another. In other words, it is the disconnection start position when the clutch 44 is disconnected.

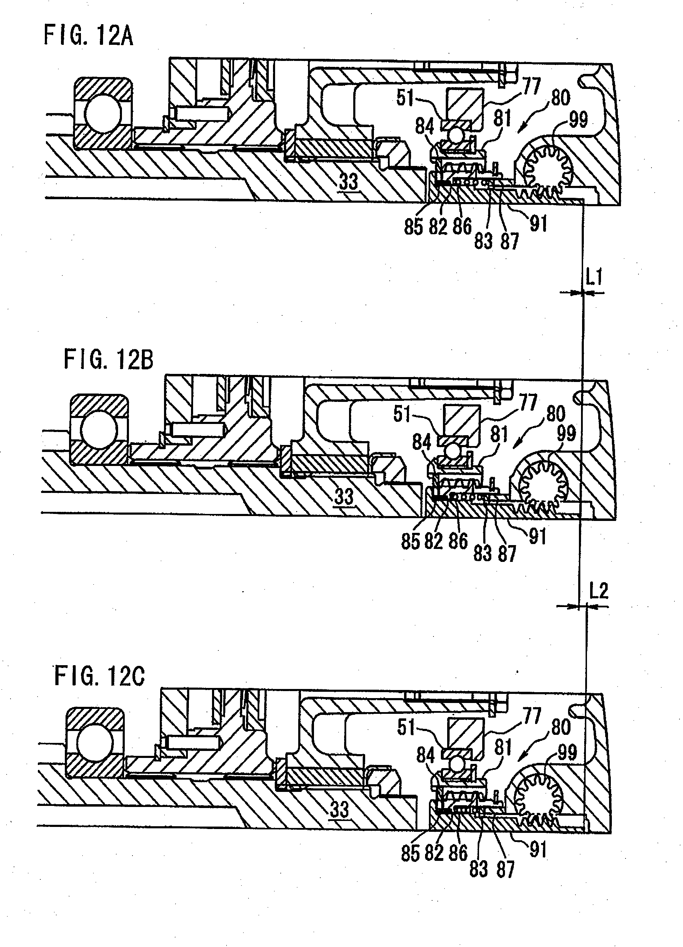

The automatic play adjusting mechanism 80 is provided between the pressure plate 77 and the pull rod 91. The automatic play adjusting mechanism 80 allows the pressure plate 77 to move relative to the pull rod 91 in the clutch axial direction CA in a clutch connected state. However, the automatic play adjusting mechanism 80 restricts the relative movement of the pressure plate 77 to the pull rod 91 in the clutch axial direction CA when the pull rod 91 moves more than a prescribed play amount L1 (in Figs. 12A and 12B) to the right in the clutch axial direction CA from the clutch connected state, in other words, in a disconnected state for the clutch 44.

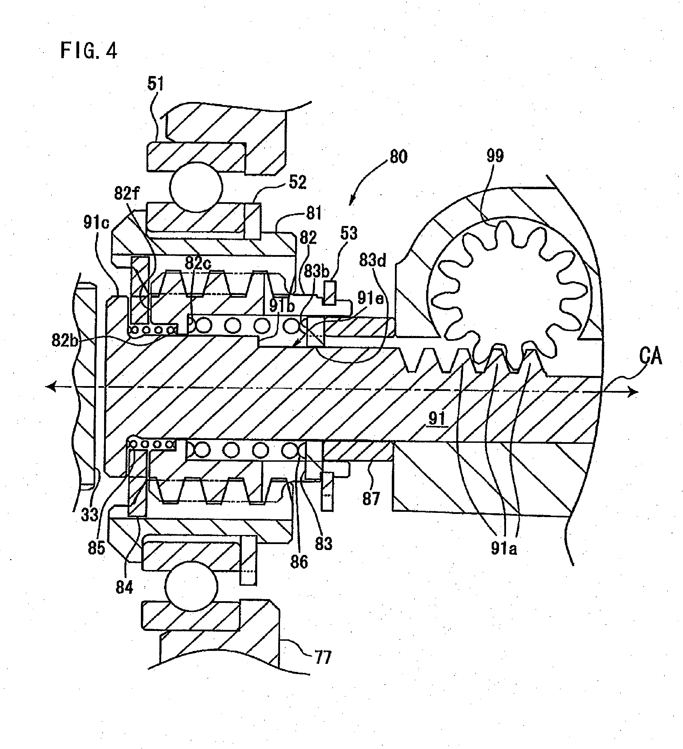

As shown in Fig. 4, the automatic play adjusting mechanism 80 includes an outer pipe 81, an inner pipe 82, an auxiliary spring 85, and a lock plate 84. The outer pipe 81 supports the pressure plate 77 so that it moves in the clutch axial direction CA together with the pressure plate 77. The inner pipe 82 is attached to the pull rod 91 and supports the outer pipe 81 to allow the relative movement of the outer pipe 81 in the clutch axial direction CA. The inner pipe 82 can move relative to the pull rod 91 in the clutch axial direction CA.

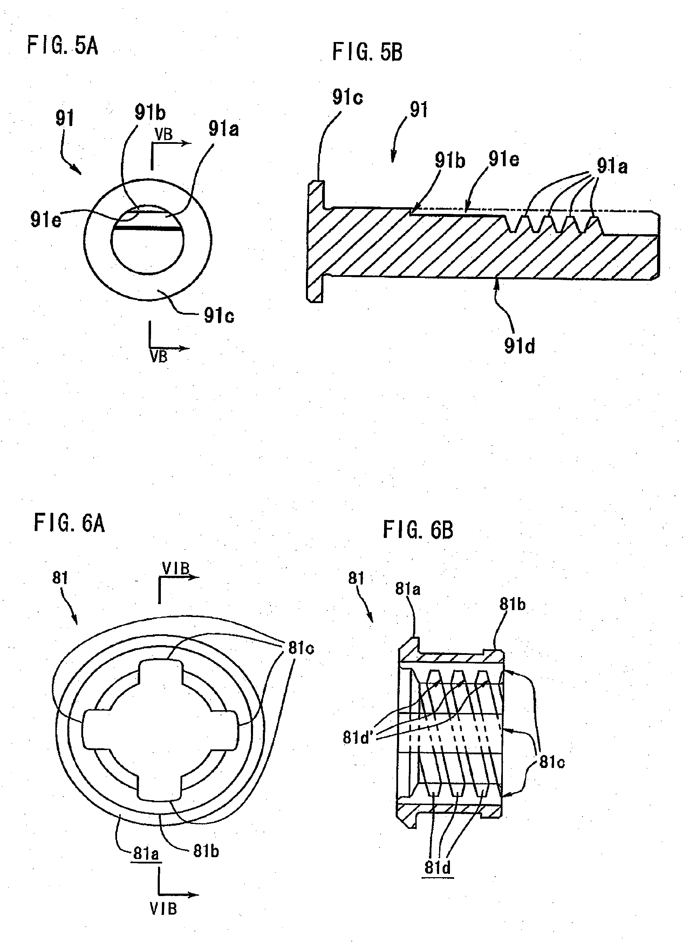

As shown in Figs. 4 and 6, the outer pipe 81 has an approximately cylindrical shape. The outer pipe 81 has flanges 81a and 81b. The flange 81a is formed on the outer side of the left end of the outer pipe 81 and the flange 81b is formed on the outer side of the right end of the outer pipe 81. A ring shaped bearing 51 is provided between the flange 81a and the flange 81b. A circlip 52 is provided between the bearing 51 and the flange 81b, and the bearing 51 is attached to the outer pipe 81. The pressure plate 77 is provided at the outer circumference of the bearing 51. In this way, the outer pipe 81 supports the pressure plate 77 through the bearing 51. As a result, the bearing 51 and the outer pipe 81 move together in the clutch axial direction CA. The pressure plate 77 and the outer pipe 81 rotate around the main shaft 33.

A circlip 53 is attached at the outer circumference of the inner pipe 82. The circlip 53 restricts the rightward movement of the slide plate 83 relative to the inner pipe 82.

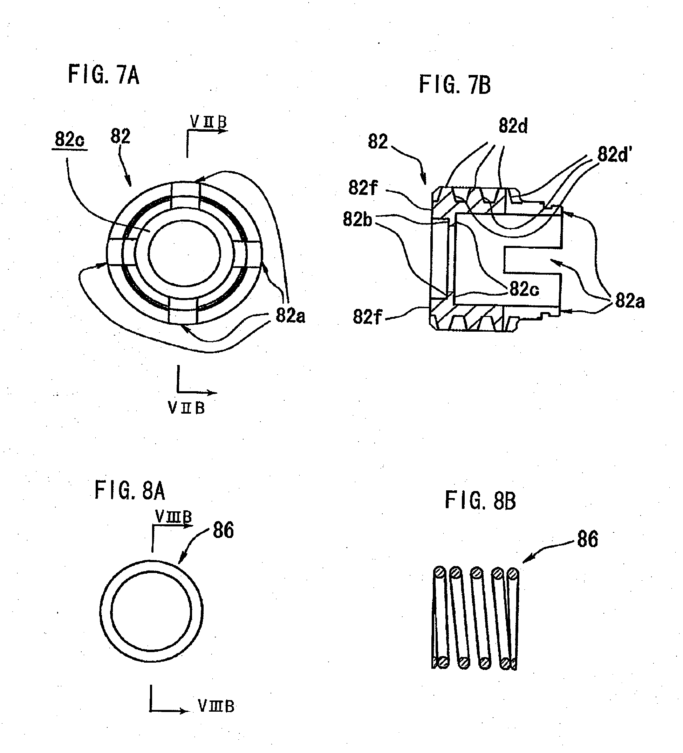

As shown in Figs. 7, the inner pipe 82 has an approximately cylindrical shape. Spring retainers 82b and 82c that extend radially inward are provided at the inner circumference of the inner pipe 82. As shown in Figs. 5A and 5B, the pull rod 91 has a shaft portion 91d and a pressurizing portion 91c. The shaft portion 91d extends approximately parallel to the axial direction of the main shaft 33 (Fig. 3). The pressurizing portion 91c extends radially outward at the left end of the shaft portion 91d. The shaft portion 91d is penetrated through the lock plate 84, the auxiliary spring 85, the auxiliary spring 86, the slide plate 83, a collar 87, and the inner pipe 82 in the clutch axial direction CA.

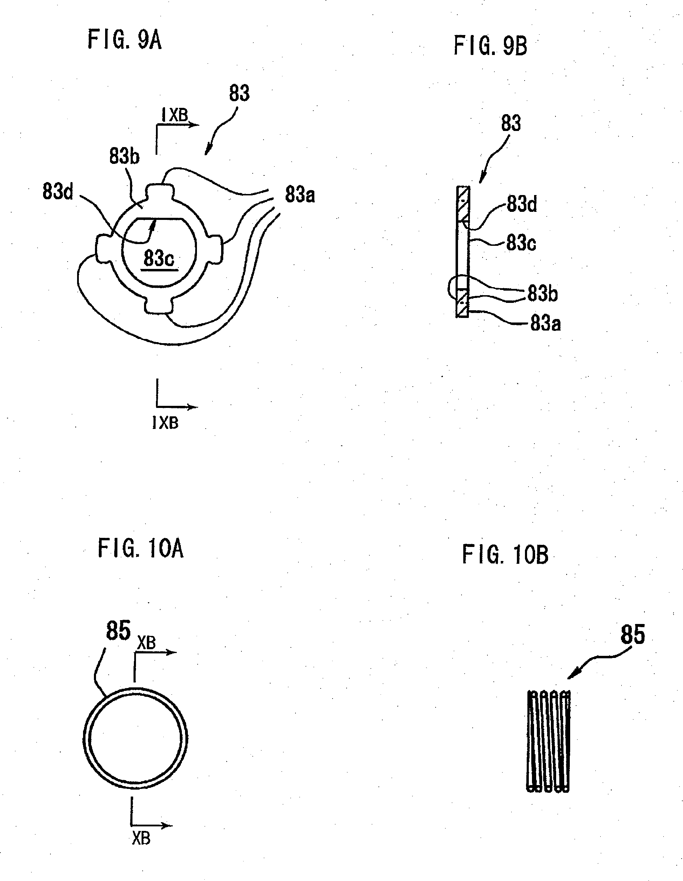

As shown in Fig. 4, the auxiliary spring 85 is provided between the pressurizing portion 91c of the pull rod 91 and the spring retainer 82b of the inner pipe 82 in the clutch axial direction CA. Stated differently, the pressurizing portion 91c of the pull rod 91 is a spring retainer arranged to receive the left end of the auxiliary spring 85 and the spring retainer 82b of the inner pipe 82 receives the right end of the auxiliary spring 85. In this way, the auxiliary spring 85 pushes the pull rod 91 to the left in the clutch axial direction CA relative the inner pipe 82. Stated differently, the auxiliary spring 85 pushes the inner pipe 82 to the right in the clutch axial direction CA relative the pull rod 91. As shown in Figs. 10A and 10B, the auxiliary spring 85 is a coil spring.

As shown in Figs. 6A and 6B, the outer pipe 81 has spiral screw grooves 81d and screw threads 81e at the inner circumferential surface. As shown in Figs. 7A and 7B, the inner pipe 82 has spiral screw threads 82d and screw grooves 82e to be engaged with the screw grooves 81d and the screw threads 81e of the outer pipe 81 at its outer circumferential surface. The number of spiral turns may be one or more.

As shown in Fig. 4, the lock plate 84 is provided between the pressurizing portion 91c of the pull rod 91 and the left end of the inner pipe 82. When the pull rod 91 moves more than a prescribed play amount L1 (Figs. 12A and 12B) in the clutch axial direction CA against the pushing force of the auxiliary spring 85, in other words, in a clutch disconnected state for the clutch 44, the lock plate 84 restricts the relative movement of the outer pipe 81 and the inner pipe 82 in the clutch axial direction CA so that the outer pipe 81 and the inner pipe 82 move together with the pull rod 91 in the clutch axial direction CA.

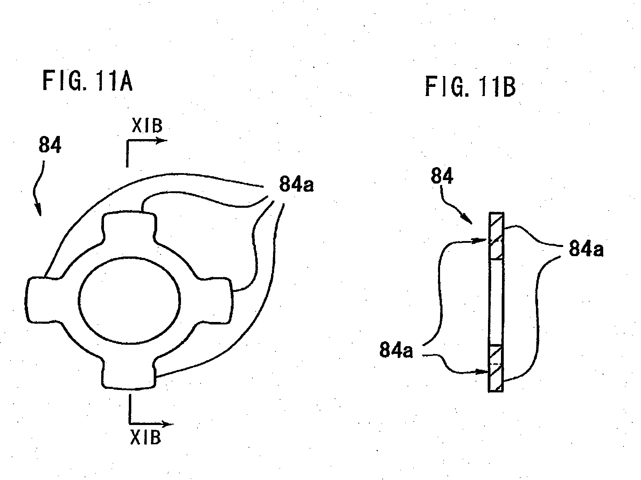

As shown in Figs. 11A and 11B, the lock plate 84 may be a plate member having an approximately annular shape. As shown in Fig. 11A, a plurality of claws 84a are provided at the outer side of the lock plate 84. The claws 84a extend outward in the radial direction. On the other hand, as shown in Fig. 6A, the outer pipe 81 has grooves 81c. The grooves 81c are formed to extend from the left end to the right end when viewed from a side. The claws 84a of the lock plate 84 are fitted into the grooves 81c. In this way, the lock plate 84 is arranged to move relative to the outer pipe 81 in the clutch axial direction CA. The lock plate 84 is arranged so that it does not rotate relative to the outer pipe 81 around the main shaft 33.

On the other hand, as shown in Fig. 7B, the inner pipe 82 has a pressurizing portion 82f abutted against the lock plate 84. The pressurizing portion 82f is provided at the left end of the inner pipe 82. The pressurizing portion 82f pushes the right side of the lock plate 84 when the pull rod 91 moves to the right in the clutch axial direction CA against the pushing force of the clutch spring 78 (Figs. 12A to 12C and other figures).

As shown in Fig. 5B, the shaft portion 91d of the pull rod 91 partly has a stepped shape. The stepped part of the shaft portion 91d will be referred to as the "stepped portion 91b." The part of the shaft portion 91d on the right side of the stepped portion 91b in Fig. 5B has a flat slide surface 91e. The annular portion 83b of the slide plate 83 is abutted against the auxiliary spring 86 (Fig. 4).

The clutch 44 includes the slide plate 83 that moves on the slide surface 91e of the pull rod 91 in the right-left direction. As shown in Figs. 9A and 9B, the slide plate 83 has an approximately annular shape. The slide plate 83 has a hole 83c in the center. The upper side of the hole 83c is in the form of a straight line. The straight line-shaped surface is a cut surface 83d.

As shown in Fig. 9A, a plurality of claws 83a are formed at the outer side of the slide plate 83. The claws 83a extend outward in the radial direction. On the other hand, as shown in Fig. 7A, the inner pipe 82 has grooves 82a. As shown in Fig. 7B, the grooves 82a are formed to extend from the right end to the vicinity of the center when viewed from a side. The claws 83a of the slide plate 83 are fitted into the grooves 82a of the inner pipe 82. In this way, the slide plate 83 is arranged to move relative to the inner pipe 82 in the clutch axial direction CA. The slide plate 83 is arranged not to rotate relative to the inner pipe 82 around the main shaft 33.

As shown in Fig. 4, the slide plate 83 is provided on the inner side of the inner pipe 82. The cut surface 83d of the slide plate 83 moves to the right and left in the clutch axial direction CA along the slide surface 91e of the pull rod 91. Note however that the collar 87 is provided on the right end of the slide plate 83. A circlip 53 is provided on the outer side of the collar 87 and the slide plate 83. When the slide plate 83 moves a prescribed distance to the right in the clutch axial direction CA relative to the inner pipe 82, the slide plate 83 abuts against the radial inner end of the circlip 53. More specifically, the movement of the slide plate 83 relative to the inner pipe 82 to the right is restricted by the circlip 53. Note that at least the slide plate 83, the inner pipe 82, and the pull rod 91 are arranged so that they do not rotate around the main shaft 33.

As shown in Fig. 4, an auxiliary spring 86 is provided on the left side of the slide plate 83. The auxiliary spring 86 is provided in series with the auxiliary spring 85 in the clutch axial direction CA. As shown in Figs. 8A and 8B, the auxiliary spring 86 is a coil spring.

As shown in Fig. 7B, the inner pipe 82 has a spring retainer 82c.
As shown in Fig. 4, the auxiliary spring 86 is provided between the spring retainer 82c of the inner pipe 82 and the annular portion 83b of the slide plate 83 in the clutch axial direction CA. The annular portion 83b is a spring retainer arranged to receive the right end of the auxiliary spring 86.

The auxiliary spring 86 fixes the inner pipe 82 in a prescribed position in a clutch connected state. The auxiliary spring 86 pushes the lock plate 84 from the right to the left through the spring retainer 82b when the lock plate 84 restricts the relative movement of the outer pipe 81 and the inner pipe 82 in the clutch axial direction CA. Therefore, the lock plate 84 is held between the pressurizing portion 91c and the spring retainer 82b.

As shown in Fig. 4, the collar 87 is provided on the right side of the auxiliary spring 86 and the slide plate 83 in the clutch axial direction CA. The collar 87 has an approximately cylindrical shape. The collar 87 is partially inserted into the inner pipe 82. The collar 87 and the slide plate 83 slide in the inner pipe 82 when the pull rod 91 moves in the clutch axial direction CA.

In the following, the operation of the automatic play adjusting mechanism 80 will be described. Figs. 12A, 12B and 12C show the operation of the automatic play adjusting mechanism 80 in the clutch 44 (Fig. 2). Fig. 12A shows the clutch 44 (Fig. 2) in a clutch connected state, Fig. 12B shows the clutch 44 in the touch point, and Fig. 12C shows the clutch 44 in a disconnected state.

In the state shown in Fig. 12A, a gap forms between the left part of the lock plate 84 and the pressurizing portion 91c (Fig. 4) of the pull rod 91 by the pushing force of the auxiliary spring 85. A gap forms between the right part of the lock plate 84 and the pressurizing portion 82f (Fig. 4) at the left end of the inner pipe 82. More specifically, in the clutch connected state, the lock plate 84 is not pressed against the pressurizing portion 91c on the left and the pressurizing portion 82f (Fig. 4) at the left end of the inner pipe 82 on the right.

At the time, in other words, in the clutch connected state, a gap forms both on the right and left sides in the clutch axial direction CA between the screw grooves 81d (Fig. 6B) of the outer pipe 81 and the screw threads 82d (Fig. 7B) of the inner pipe 82. Therefore, the outer pipe 81 can move relative to the inner pipe 82 in the clutch axial direction CA and can rotate around the main shaft 33 relative to the inner pipe 82. In this way, if the plate group 66 thermally expands and the pressure plate 77 moves to the right in the clutch axial direction CA, the outer pipe 81 rotates in a prescribed direction around the main shaft 33 relative to the inner pipe 82 and moves to the right in the clutch axial direction CA (Fig. 3). Conversely, when the thermal expansion of the plate group 66 ends, the pressure plate 77 moves to the left in the clutch axial direction CA. When the plate group 66 wears, the pressure plate 77 moves to the left in the clutch axial direction CA. In this way, the outer pipe 81 rotates reversely to the prescribed direction around the main shaft 33 and moves to the left in the clutch axial direction CA. This is because the inner pipe 82 substantially does not move from a prescribed position in the clutch axial direction CA by the pushing force of the auxiliary springs 85 and 86 when the plate group 66 is affected by heat.

On the other hand, the pull rod 91 receives reaction force from the pinion 99 at the rack 91a at the time, and it substantially does not move relative to the pressure plate 77 and the outer pipe 81. As described above, the pressure plate 77 and the outer pipe 81 move together in the clutch axial direction CA through the bearing 51. More specifically, in a clutch connected state, when the plate group 66 thermally expands or the plate group 66 wears, the outer pipe 81 moves relative to the pull rod 91 in the clutch axial direction CA. Therefore, in the clutch connected state, the automatic play adjusting mechanism 80 allows the pressure plate 77 to move relative to the pull rod 91 in the clutch axial direction CA.

When the plate group 66 is thermally affected and the outer pipe 81 rotates around the main shaft 33 relative to the inner pipe 82 and moves in the clutch axial direction CA, friction is caused between the screw grooves 81d of the outer pipe 81 and the screw threads 82d of the inner pipe 82. Therefore, the outer pipe 81 rotates around the main shaft 33 relative to the inner pipe 82 by the vibration or the like of the power unit 3 and moves in the clutch axial direction CA. As a result, the automatic play adjusting mechanism 80 can absorb the effect of the heat on the plate group 66.

From the state shown in Fig. 12A, the pull rod 91 moves a prescribed play amount L1 to the right in the clutch axial direction CA as the pinion 99 rotates, and the state shown in Fig. 12B is attained. In the state shown in Fig. 12B, the pressurizing portion 91c (Fig. 4) of the pull rod 91 abuts against the left end surface 84b (Fig. 11B) of the lock plate 84. More specifically, the gap between the left part of the lock plate 84 and the pressurizing portion 91c of the pull rod 91 is then substantially eliminated. At the time, the gap between the right part of the lock plate 84 and the pressurizing portion 82f (Fig. 4) at the left end of the inner pipe 82 is also substantially eliminated. More specifically, in the touch point for the clutch 44, the lock plate 84 is pressed against the pressurizing portion 91c on the left and the pressurizing portion 82f (Fig. 4) at the left end of the inner pipe 82 on the right.

In the touch point for the clutch 44, the abutment surfaces 82d' of the screw threads 82d (Fig. 7B) of the inner pipe 82 in a clutch disconnected state are abutted against the abutment surfaces 81d' of the screw grooves 81d (Fig. 6B) of the outer pipe 81 in a clutch disconnected state. More specifically, the gap generated between the screw grooves 81d (Fig. 6B) of the outer pipe 81 and the screw threads 82d (Fig. 7B) of the inner pipe 82 is substantially eliminated. This restricts the movement of the outer pipe 81 relative to the inner pipe 82 in the clutch axial direction CA and the rotation of the outer pipe 81 relative to the inner pipe 82 around the main shaft 33. As a result, when the pull rod 91 moves more than a prescribed play amount L1 to the right in the clutch axial direction CA (i. e., after the touch point), the outer pipe 81, the inner pipe 82, the lock plate 84, and the pull rod 91 move together to the right in the clutch axial direction CA. As described above, the pressure plate 77 and the outer pipe 81 move together in the clutch axial direction CA through the bearing 51. Therefore, when the pull rod 91 moves more than a prescribed play amount L1 to the right in the clutch axial direction CA (i.e., after the touch point), the movement of the pressure plate 77 relative to the pull rod 91 in the clutch axial direction CA is restricted. More specifically, after the touch point, the pressure plate 77 and the pull rod 91 move together to the right in the clutch axial direction CA. On the other hand, after the touch point, the slide plate 83 and the collar 87 move to the left in the clutch axial direction CA relative to the outer pipe 81, the inner pipe 82, the lock plate 84, and the pull rod 91.

The prescribed play amount L1 is the amount of movement of the pull rod 91 until the lock plate 84 is pressed between the pressurizing portion 91c of the pull rod 91 and the pressurizing portion 82f of the inner pipe 82, and the abutment surfaces 82d' of the inner pipe 82 are abutted against the abutment surfaces 81d' of the outer pipe 81. The movement amount is substantially unchanged if the pressure plate 77 is moved to the right in the clutch axial direction CA by the thermal expansion of the clutch 44. The movement amount is substantially unchanged if the pressure plate 77 is moved to the left in the clutch axial direction CA by the wear of the plate group 66. The movement amount substantially changes for example when the automatic play adjusting mechanism 80 thermally expands. When the automatic play adjusting mechanism 80 thermally expands, for example, the gap between the grooves 81d of the outer pipe 81 and the screw threads 82d of the inner pipe 82 is narrowed. Note however that in the automatic play adjusting mechanism 80, the friction heat between the outer pipe 81 and the inner pipe 82 is extremely small as compared to the friction heat between the friction plate 64 and the clutch plate 65. More specifically, the thermal expansion of the automatic play adjusting mechanism 80 is extremely small as compared to the thermal expansion of the plate group 66. Therefore, if the clutch 44 having the plate group 66 is thermally expanded, the disconnection start position for the clutch 44, in other words, the position of the touch point is substantially unchanged.

The movement amount substantially changes when the gap between the grooves 81d of the outer pipe 81 and the screw threads 82d of the inner pipe 82 is increased for example by wear. However, in the automatic play adjusting mechanism 80, the load applied between the grooves 81d of the outer pipe 81 and the screw threads 82d of the inner pipe 82 is extremely small as compared to the load applied on the friction plate 64 and the clutch plate 65 (i.e., the plate group 66). More specifically, the grooves 81d of the outer pipe 81 and the screw threads 82d of the inner pipe 82 in the automatic play adjusting mechanism 80 wear little as compared to the plate group 66. Therefore, when the thickness of the friction plate 64 or the clutch plate 65 is reduced by wear or the like, the disconnection start position for the clutch 44, in other words, the position of the touch point is substantially unchanged.

When the pull rod 91 moves a prescribed amount L2 to the right in the clutch axial direction CA from the state shown in Fig. 12B as the pinion 99 rotates, the state shown in Fig. 12C is attained. The pressure plate 77 and the pull rod 91 move together to the right in the clutch axial direction CA from the state shown in Fig. 12B to the state shown in Fig. 12C, i.e., from the touch point to the clutch disconnected state. From the touch point to the clutch disconnected state, the slide plate 83 and the collar 87 move to the left in the clutch axial direction CA relative to the outer pipe 81, the inner pipe 82, the lock plate 84, and the pull rod 91.

As described above, the clutch 44 according to the present embodiment includes the automatic play adjusting mechanism 80. The automatic play adjusting mechanism 80 is interposed between the pressure plate 77 and the pull rod 91 and allows the relative movement of the pressure plate 77 to the pull rod 91 in the clutch axial direction CA in a clutch connected state where the pressure plate 64 and the clutch plate 65 are pressed against each other. However, the automatic play adjusting mechanism 80 restricts the relative movement of the pressure plate 77 to the pull rod 91 in the clutch axial direction CA when the pull rod 91 moves more than a prescribed play amount L1 (Figs. 12A and 12B) to the right in the clutch axial direction CA from a clutch connected state.

When the clutch 44 according to the present embodiment is thermally expanded, the pressure plate 77 is pushed to the right in the clutch axial direction CA by the plate group 66 and the pressure plate 77 moves to the right in the clutch axial direction CA. In a clutch connected state, however, the pressure plate 77 can move relative to the pull rod 91 in the clutch axial direction CA by the automatic play adjusting mechanism 80. More specifically, if the thermal expansion of the clutch 44 increases the size (thickness) of the friction plate 64 and the clutch plate 65 in the clutch axial direction CA, the pressure plate 77 moves to the right in the clutch axial direction CA relative to the pull rod 91. The position of the pull rod 91 in the clutch axial direction CA is substantially unchanged if the friction plate 64 and the clutch plate 65 increase in thickness because of the thermal expansion of the clutch 44. As a result, the automatic play adjusting mechanism 80 absorbs the shift of the touch point caused by the thermal expansion of the clutch 44. On the other hand, the position where the clutch 44 is disconnected is the position reached by the pull rod 91 after moving a prescribed play amount L1 (Figs. 12A and 12B) to the right in the clutch axial direction CA. The position is substantially unchanged if the pressure plate 77 moves to the right in the clutch axial direction CA by the thermal expansion of the clutch 44. More specifically, the disconnection start position for the clutch 44 or the position of the touch point is substantially unchanged if the clutch 44 is thermally expanded. Therefore, with the clutch 44 according to the present embodiment, the shift of the touch point caused by the thermal expansion can be reduced.

With the clutch 44 according to the present embodiment, when the thickness of the friction plate 64 or the clutch plate 65 is reduced by wear, the pressure plate 77 is moved to the left in the clutch axial direction CA by the pushing force of the clutch spring 78. In a clutch connected state, however, the pressure plate 77 can move relative to the pull rod 91 in the clutch axial direction CA by the automatic play adjusting mechanism 80. More specifically, when the thickness of the friction plate 64 or the clutch plate 65 is reduced by wear, the pressure plate 77 moves relative to the pull rod 91 to the left in the clutch axial direction CA. The position of the pull rod 91 in the clutch axial direction CA is substantially unchanged when the thickness of the friction plate 64 or the clutch plate 65 is reduced. As a result, the automatic play adjusting mechanism 80 can absorb the shift of the touch point when the thickness of the friction plate 64 or the clutch plate 65 is reduced by wear. On the other hand, the position where the clutch 44 is disconnected is the position reached by the pull rod 91 after moving the prescribed play amount L1 (Figs. 12A and 12B) to the right in the clutch axial direction CA. The position is substantially unchanged when the pressure plate 77 is moved to the left in the clutch axial direction CA by the wear of the plate group 66. More specifically, when the thickness of the friction plate 64 or the clutch plate 65 is reduced by wear, the disconnection start position for the clutch 44 or the position of the touch point is substantially unchanged. Therefore, with the clutch 44 according to the present embodiment, the shift of the touch point caused by the wear of the plate group 66 can be reduced.

### Second Embodiment

According to the first embodiment, the clutch 44 is disconnected when the pull rod 91 is pulled to the right in the clutch axial direction CA by the clutch release mechanism 98. More specifically, the clutch 44 according to the first embodiment described above includes a so-called outer pull mechanism. However, the clutch 44 may include a so-called inner push mechanism. In the clutch 44 according to the present embodiment, a rod provided in a hollow main shaft 33 is pushed to the right in the clutch axial direction CA, so that the clutch 44 is disconnected. In the following description, elements having the same effects as those of the first embodiment are designated by the same reference characters and their description will not be provided.

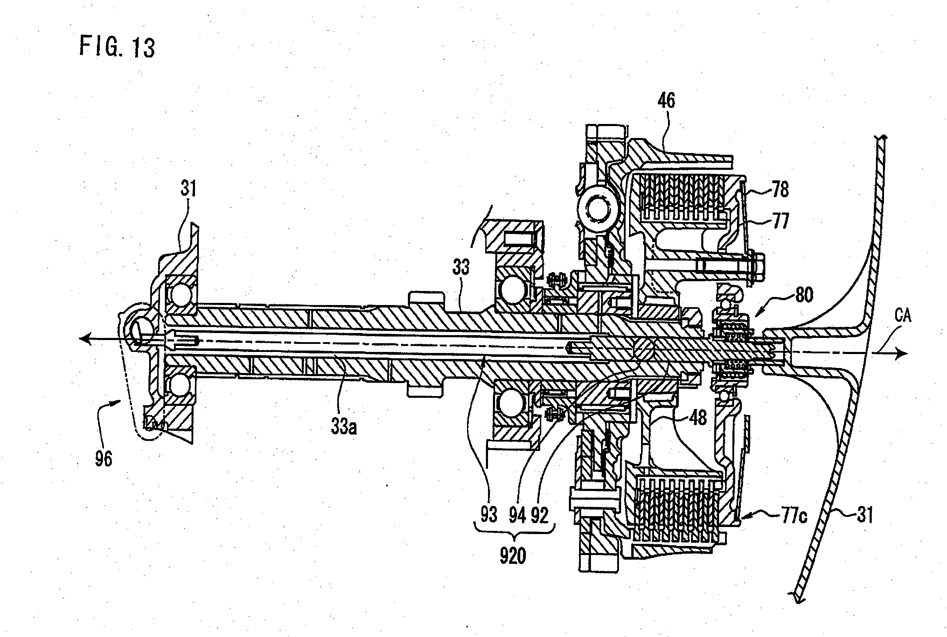

As shown in Fig. 13, the clutch 44 according to the present embodiment includes a push member 920 and a clutch release mechanism 96 arranged to push the push member 920 to the right in the clutch axial direction CA. The clutch release mechanism 96 forcibly releases the pressurized contact state of the plate group 66 in response to the operation of the clutch lever 24 by the rider of the motorcycle 1. The clutch release mechanism 96 is thus operated, so that the clutch 44 can be disconnected.

The push member 920 includes a short push rod 92, a long push rod 93, and a ball 94 interposed between the short push rod 92 and the long push rod 93. A through hole 33a is formed in the main shaft 33 and the push member 920 is provided in the through hole 33a. The right end of the short push rod 92 projects from the main shaft 33.

The clutch release mechanism 96 operates based on the operation of the clutch lever 24 (Fig. 1) by the rider of the motorcycle 1. In this way, the long push rod 93, the ball 94, and the short push rod 92 move to the right. When the long push rod 93, the ball 94, and the short push rod 92 move to the right, the pressure plate 77 moves to the right in the clutch axial direction CA, so that the clutch 44 is disconnected.

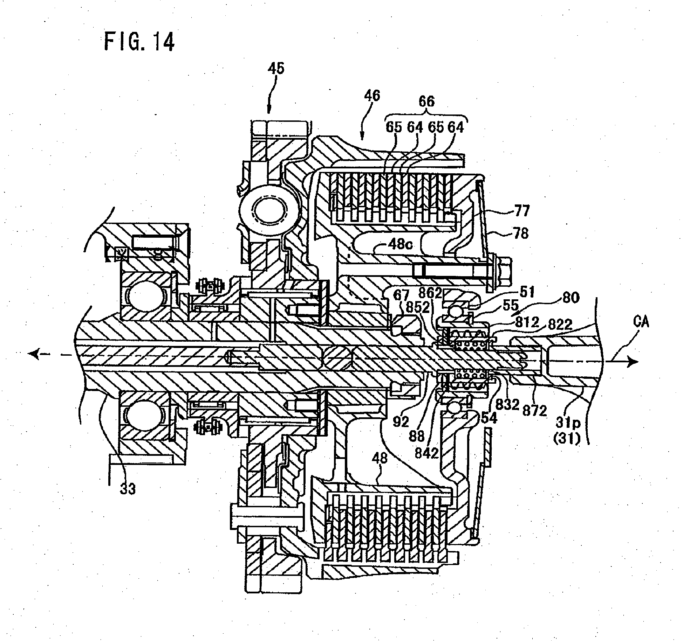

As shown in Fig. 14, the automatic play adjusting mechanism 80 according to the present embodiment includes an outer pipe 812, an inner pipe 822, an auxiliary spring 852, and a lock plate 842. The outer pipe 812 supports the pressure plate 77 so that it moves together with the pressure plate 77 in the clutch axial direction CA. The inner pipe 822 is attached to the short push rod 92 and supports the outer pipe 812 to allow the relative movement of the outer pipe 812 in the clutch axial direction CA. The inner pipe 822 can move relative to the short push rod 92 in the clutch axial direction CA.

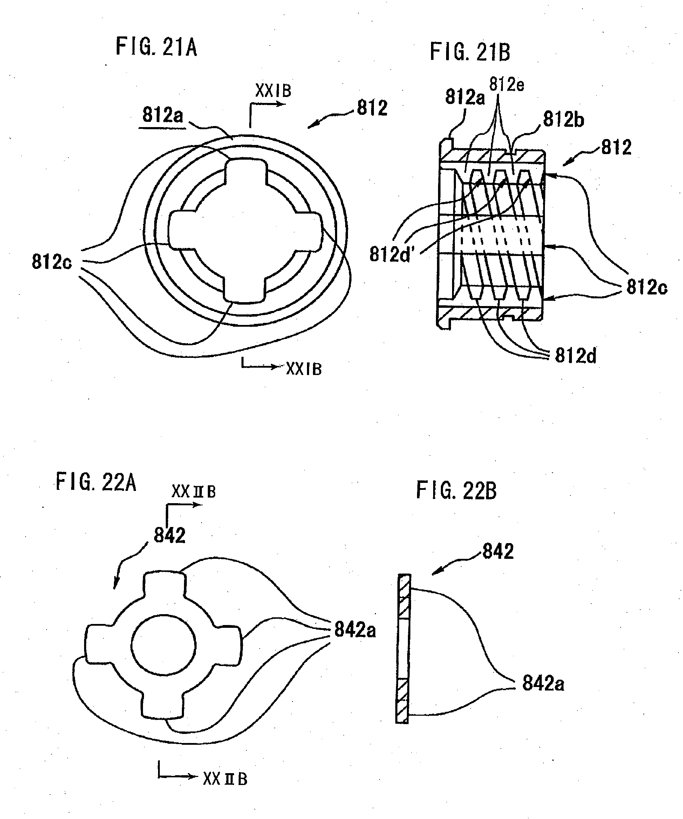

As shown in Figs. 14 and 21A and 21B, the outer pipe 812 has an approximately cylindrical shape. The outer pipe 812 has a flange 812a that extends radially outward at the outer circumferential portion. The outer pipe 812 has a clip groove 812b. The clip groove 812b is formed on the outer circumferential surface. The flange 812a is formed on the outer side of the left end of the outer pipe 81 and the clip groove 812b is formed on the right of the flange 812a. A bearing 51 is provided between the flange 812a and the clip grooves 812b in the clutch axial direction CA. The clip groove 812b is provided with a circlip 55 and the bearing 51 is attached to the outer pipe 812. The pressure plate 77 is attached at the radially outer side of the bearing 51. In this way, the outer pipe 812 supports the pressure plate 77 through the bearing 51. As a result, the bearing 51 and the outer pipe 812 move together in the clutch axial direction CA. The pressure plate 77 and the outer pipe 812 rotate around the main shaft 33.

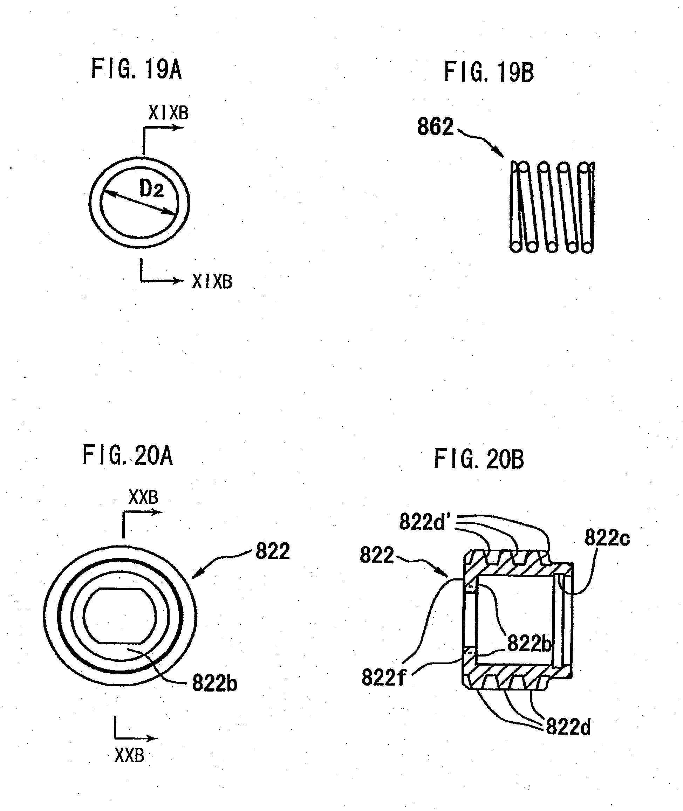

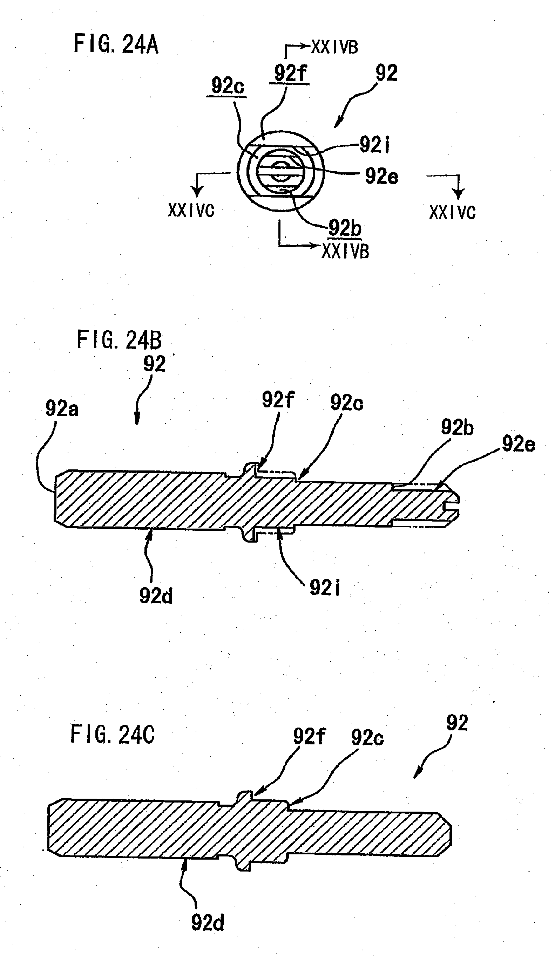

As shown in Fig. 20A and 20B, the inner pipe 822 has an approximately cylindrical shape. A spring retainer 822b that extends radially inward is formed inside the inner pipe 822. On the other hand, as shown in Fig. 24B, the short push rod 92 has a shaft portion 92d, a spring retainer 92c, and a pressurizing portion 92f. The shaft portion 92d is a part of the main shaft 33 (Fig. 3) that extends approximately parallel to the axial direction. The spring retainer 92c is a part of the shaft portion 92d having a large outer diameter. The pressurizing portion 92f is formed at the shaft portion 92d and extends in a flange shape radially outward on the left of the spring retainer 92c. A slide surface 92i is formed in a flat shape between the pressurizing portion 92f and the spring retainer 92c of the shaft portion 92d. On the slide surface 92i, the lock plate 842 (Fig. 14), a spacer 88 (Fig. 14), and a part of the inner pipe 822 move in the clutch axial direction CA relative to the short push rod 92. The part of the shaft portion 92d on the right of the pressurizing portion 92f penetrates through the lock plate 842, the auxiliary spring 852, the auxiliary spring 862, the slide plate 832, the collar 872 and the inner pipe 822 in the clutch axial direction CA.

The left end surface 92a of the short push rod 92 is a surface abutted against the ball 94 (Fig. 14). As shown in Fig. 24B, the shaft portion 92d of the short push rod 92 partly has a stepped shape in its right part. The stepped part of the shaft portion 92d is a stopper portion 92b. The slide surface 92e has a flat shape at the part of the shaft portion 92d on the right of the stopper portion 92b.

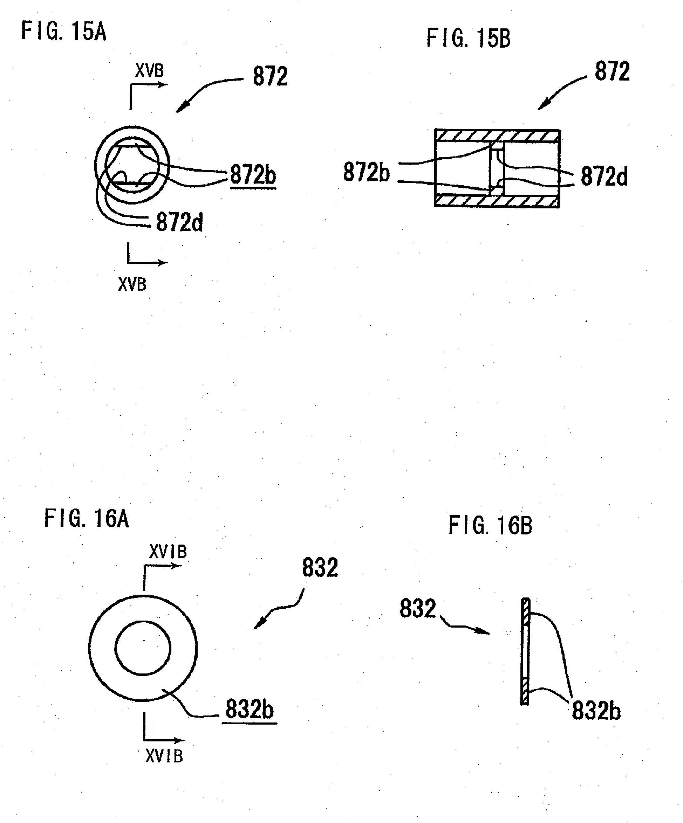

As shown in Fig. 14, the clutch 44 includes the slide plate 832. The slide plate 832 moves between the spring retainer 92c and the stopper portion 92b of the shaft portion 92d of the short push rod 92 in the clutch axial direction CA. As shown in Figs. 16A and 16B, the slide plate 832 is a plate member having an approximately annular shape. The slide plate 832 has an annular portion 832b.

On the other hand, as shown in Fig. 20B, the inner pipe 822 has a clip groove 822c on the inner circumferential surface. A circlip 54 (Fig. 14) is attached at the clip groove 822c. The slide plate 832 has its rightward relative movement to the inner pipe 82 restricted by the circlip 54 (Fig. 14).

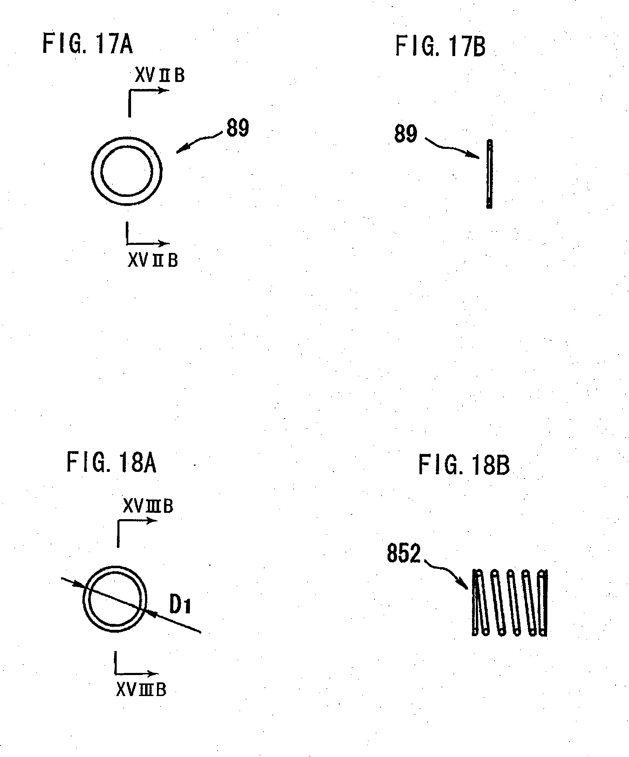

As shown in Figs. 14, 16A, 16B, 24A, 24B, and 24C, the auxiliary spring 852 is provided between the spring retainer 92c of the short push rod 92 and the annular portion 832b of the slide plate 832 in the clutch axial direction CA. Stated differently, the spring retainer 92c of the short push rod 92 receives the left end of the auxiliary spring 852 and the annular portion 832b of the slide plate 832 receives the right end of the auxiliary spring 852. According to the present embodiment, the left end of the auxiliary spring 852 is abutted against the spring retainer 92c of the short push rod 92 through an annular plate 89 (Fig. 17). In this way, the auxiliary spring 852 pushes the short push rod 92 relative to the inner pipe 82 to the left in the clutch axial direction CA. Stated differently, the auxiliary spring 852 pushes the inner pipe 822 to the right in the clutch axial direction CA relative to the short push rod 92 through the slide plate 832. As shown in Fig. 18A and 18B, the auxiliary spring 852 is a coil spring.

As shown in Figs. 21A and 21B, the outer pipe 812 has spiral screw grooves 812d and screw threads 812e at the inner circumferential surface. As shown in Figs. 20A and 20B, the inner pipe 822 has screw treads 822d and screw grooves 822e to be engaged with the screw grooves 812d and the screw threads 812e at the outer circumferential surface.

As shown in Figs. 14 and 20A and 20B, the inner pipe 822 has a pressurizing portion 822f abutted against the lock plate 842. The pressurizing portion 822f is provided at the left end of the inner pipe 822. The pressurizing portion 822f is provided at the backside of the spring retainer 822b in the clutch axial direction CA. The pressurizing portion 822f pressurizes the right side of the lock plate 842 when the short push rod 92 moves to the right in the clutch axial direction CA against the pushing force of the clutch spring 78.

As shown in Figs. 14 and 20A and 20B, the lock plate 842 is provided between the pressurizing portion 92f of the short push rod 92 and the pressurizing portion 822f of the inner pipe 822 in the clutch axial direction CA. A spacer 88 is provided between the pressurizing portion 92f of the short push rod 92 and the lock plate 842 in the clutch axial direction CA. More specifically, the lock plate 842 is provided between the spacer 88 and the pressurizing portion 822f of the inner pipe 822 in clutch axial direction CA.

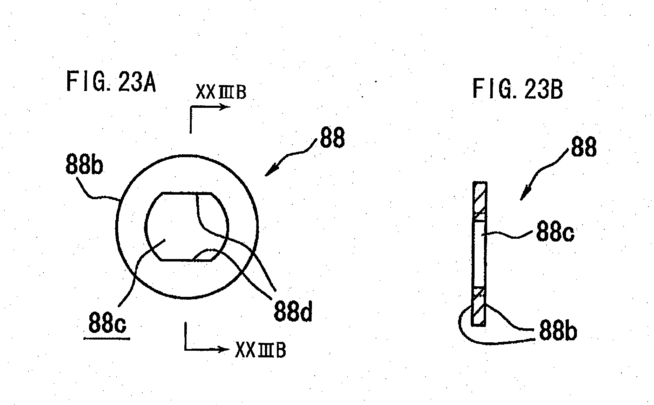

The spacer 88 can move relative to the short push rod 92 in the clutch axial direction CA and cannot move relative to the short push rod 92 around the main shaft 33. As shown in Fig. 23A, the spacer 88 has a hole 88c. The upper and lower sides of the hole 88c are formed in the shape of a straight line. The surface in the straight line shape is a cut surface 88d. The cut surface 88d and the slide surface 92i of the short push rod 92 are abutted against each other, so that the spacer 88 moves relative to the short push rod 92 in the clutch axial direction CA.

When the short push rod 92 moves more than the prescribed play amount to the right in the clutch axial direction CA against the pushing force of the auxiliary spring 852, in other words, in a disconnected state for the clutch 44, the lock plate 842 restricts the relative movement of the outer pipe 812 and the inner pipe 822 in the clutch axial direction CA so that the outer pipe 812 and the inner pipe 822 move together with the short push rod 92 in the clutch axial direction CA.

As shown in Fig. 22A and 22B, the lock plate 842 is a plate member having an approximately annular shape. As shown in Fig. 22A, a plurality of claws 842a are formed at the outer side of the lock plate 842. The claws 842a extend outward in the radial direction. On the other hand, as shown in Fig. 21A, the outer pipe 812 has grooves 812c. The grooves 812c extend from the left end to the right end when viewed from a side (Fig. 21B). The claws 842a of the lock plate 842 are fitted into the grooves 812c. In this way, the lock plate 842 is arranged to move relative to the outer pipe 812 in the clutch axial direction CA. The lock plate 842 does not rotate relative to the outer pipe 812 around the main shaft 33.

As shown in Fig. 14, the clutch 44 is provided with the auxiliary spring 862 and the auxiliary spring 852. The auxiliary spring 862 is provided coaxially with the auxiliary spring 852 in the clutch axial direction CA. Alternatively, the auxiliary spring 862 may be arranged in parallel with the auxiliary spring 852 in the clutch axial direction CA. As shown in Fig. 19A and 19B, the auxiliary spring 862 is a coil spring. As shown in Figs. 18A and 19A, the inner diameter D2 of the auxiliary spring 862 is greater than the outer diameter D1 of the auxiliary spring 852.

As described above, the inner pipe 822 has the spring retainer 822b.
The slide plate 832 has the annular portion 832b. As shown in Figs. 14, 19A, 19B, 16A, and 16B, the auxiliary spring 862 is provided between the spring retainer 822b of the inner pipe 822 and the annular portion 832b of the slide plate 832 in the clutch axial direction CA. More specifically, the annular portion 832b of the slide plate 832 receives the right end of the auxiliary spring 862.

The auxiliary spring 862 fixes the inner pipe 822 in a prescribed position in a clutch connected state. The auxiliary spring 862 pushes the lock plate 842 from the right to the left through the spring retainer 822b when the lock spring 842 restricts the relative movement of the outer and inner pipes 812 and 822 in the clutch axial direction CA. Therefore, the lock plate 842 is held between the annular portion 88b of the spacer 88 and the spring retainer 822b.

As shown in Fig. 14, the collar 872 is provided on the right of the auxiliary spring 862 and the slide plate 832 in the clutch axial direction CA. The collar 872 has at least a part of its left end stored in the inner pipe 822. The collar 872 and the slide plate 83 slide inside the inner pipe 822 when the short push rod 92 moves in the clutch axial direction CA.

In the power unit 3 according to the present embodiment, a part of the crankcase 31 on the inner side projects to the left in the clutch axial direction CA. This part is referred to as "projection" 31p." The projection 31p has an approximately cylindrical shape. The collar 872 is fitted into the inner circumferential portion of the projection 31p.

As shown in Figs. 15A and 15B, the collar 872 has an approximately cylindrical shape. As shown in Fig. 15B, a part of the inner circumferential portion of the collar 872 extends radially inward. The part is referred to as the "projection 872b." As shown in Fig. 15A, the projection 872b is formed in a straight line shape in the vertical direction in Fig. 15A. The surface in the straight line shape is a cut surface 872d. As shown in Figs. 14, 15A, 15B, 24A, 24B, and 24C, the slide surface 92e of the short push rod 92 is fitted into the projection 872b of the collar 872. At the time, the slide surface 92e is engaged with the cut surface 872d. As a result, at least the collar 872, the inner pipe 822, and the short push rod 92 cannot rotate relative to one another around the main shaft 33.

In the following, the operation of the automatic play adjusting mechanism 80 according to the present embodiment will be described. In a so-called clutch connected state, the pushing force of the auxiliary spring 852 causes a gap to form between the left part of the lock plate 842 and the spacer 88 (Fig. 14). The pushing force of the auxiliary spring 852 causes a gap to form between the right part of the lock plate 842 and the pressurizing portion 822f (Fig. 20) at the left end of the inner pipe 822. More specifically, in a clutch connected state, the lock plate 842 is not abutted against the pressurizing portion 92f (Fig. 24) on the left and the pressurizing portion 822f (Fig. 20) of the inner pipe 822 on the right.

In this case or in a clutch connected state, there is a gap both on the left and right between the screw grooves 812d (Fig. 21B) of the outer pipe 812 and the screw threads 822d (Fig. 20B) of the inner pipe 822. Therefore, the outer pipe 812 can move in the clutch axial direction CA relative to inner pipe 822 and rotate around the main shaft 33 relative to the inner pipe 822. In this way, when the plate group 66 thermally expands and the pressure plate 77 moves to the right in the clutch axial direction CA, the outer pipe 812 rotates in a prescribed direction around the main shaft 33 relative to the inner pipe 822 and moves to the right in the clutch axial direction CA (Fig. 14). Conversely, when the thermal expansion of the plate group 66 ends, the pressure plate 77 moves to the left in the clutch axial direction CA. When the plate group 66 wears, the pressure plate 77 moves to the left in the clutch axial direction CA. In this way, the outer pipe 812 rotates reversely to the prescribed direction relative to the inner pipe 822 around the main shaft 33 and moves to the left in the clutch axial direction CA. This is because when the plate group 66 is affected by the heat, the pushing force of the auxiliary spring 862 prevents the inner pipe 822 from substantially moving from the prescribed position in the clutch axial direction CA.

On the other hand, the short push rod 92 does not substantially move relative to the pressure plate 77 and the outer pipe 812 by the pushing force of the auxiliary spring 852 and the auxiliary spring 862 even when the plate group 66 thermally expands or wear. As described above, the pressure plate 77 and the outer pipe 812 move together in the clutch axial direction CA through the bearing 51. More specifically, in a clutch connected state, when the plate group 66 thermally expands or wears, the outer pipe 812 moves relative to the short push rod 92 in the clutch axial direction CA. Therefore, the automatic play adjusting mechanism 80 allows the relative movement of the pressure plate 77 to the short push rod 92 in the clutch axial direction CA in a clutch connected state.

When the clutch release mechanism 96 (Fig. 13) operates to move the short push rod 92 a prescribed distance to the right in the clutch axial direction CA from the clutch connected state, the relative movement of the outer and inner pipes 812 and 822 in the clutch axial direction CA is restricted. At the time, the pressurizing portion 92f (Fig. 24) of the short push rod 92 abuts against the left end surface of the spacer 88. As a result, the gap between the left portion of the lock plate 842 and the spacer 88 is substantially eliminated. At the time, the gap between the right portion of the lock plate 842 and the pressurizing portion 822f (Fig. 20) on the left end of the inner pipe 822 is also substantially eliminated. When the short push rod 92 moves a prescribed distance to the right in the clutch axial direction CA, and the relative movement of the outer and inner pipes 812 and 822 is restricted, the clutch 44 is in the touch point. More specifically, In the touch point for the clutch, the lock plat e842 is pressed against the pressurizing portion 92f (Fig. 24) of the short push rod 92 on the left and the pressurizing portion 822f (Fig. 20) at the left end of the inner pipe 822 on the right.

In the touch point for the clutch 44, the abutment surfaces 822d' of the screw threads 822d (Fig. 20B) of the inner pipe 822 in a clutch disconnected state are abutted against the abutment surfaces 812d' of the screw grooves 812d (Fig. 21B) of the outer pipe 812 in a clutch disconnected state. More specifically, the gap made between the screw grooves 812d (Fig. 21B) of the outer pipe 812 and the screw threads 822d (Fig. 20B) of the inner pipe 822 is substantially eliminated. This restricts the movement of the outer pipe 812 relative to the inner pipe 822 in the clutch axial direction CA and the rotation of the outer pipe 812 relative to the inner pipe 812 around the main shaft 33. As a result, when the short push rod 92 moves at least the prescribed play amount to the right in the clutch axial direction CA (in other words after the touch point), the outer and inner pipes 812 and 822, the lock plate 842, and the short push rod 92 move together to the right in the clutch axial direction CA. As described above, the pressure plate 77 and the outer pipe 812 move together in the clutch axial direction CA through the bearing 51. Therefore, when the short push rod 92 moves at least the prescribed play amount to the right in the clutch axial direction CA (in other words after the touch point), the movement of the pressure plate 77 relative to the short push rod 92 in the clutch axial direction CA is restricted. More specifically, after the touch point, the pressure plate 77 and the short push rod 92 move together to the right in the clutch axial direction CA. On the other hand, after the touch point, the slide plate 832 and the collar 872 move to the left in the clutch axial direction CA relative to the outer and inner pipes 812 and 822, the lock plate 842, and the short push rod 92.

When the short push rod 92 further moves a prescribed distance to the right from the touch point in the clutch 44 by the operation of the driving mechanism 96 (Fig. 13), a clutch disconnected state is reached. The pressure plate 77 and the short push rod 92 move together to the right in the clutch axial direction CA from the touch point to the clutch disconnected state. The slide plate 832 and the collar 872 move to the left in the clutch axial direction CA relative to the outer and inner pipes 812 and 822, the lock plate 842, and the short push rod 92 from the touch point to the clutch disconnected state.

As in the foregoing, the clutch 44 according to the present embodiment includes the automatic play adjusting mechanism 80. The automatic play adjusting mechanism 80 is interposed between the pressure plate 77 and the short push rod 92 and allows the relative movement of the pressure plate 77 to the short push rod 92 in the clutch axial direction CA in a clutch connected state where the friction plate 64 and the clutch plate 65 are pressed against each other. The automatic play adjusting mechanism 80 however restricts the relative movement of the pressure plate 77 to the short push rod 92 in the clutch axial direction CA when the short push rod 92 moves more than the prescribed play amount to the right in the clutch axial direction CA from the clutch connected state.

The thermal expansion of the clutch 44 according to the embodiment causes the pressure plate 77 to be pushed by the plate group 66 to the right in the clutch axial direction CA and the pressure plate 77 moves to the right in the clutch axial direction CA. However, in a clutch connected state, the pressure plate 77 can move relative to the short push rod 92 in the clutch axial direction CA by the automatic play adjusting mechanism 80. More specifically, when the thermal expansion of the clutch 44 causes the friction plate 64 and the clutch plate 65 to have an increased size (thickness) in the clutch axial direction CA, the pressure plate 77 moves to the right in the clutch axial direction CA relative to the short push rod 92. When the thermal expansion of the clutch 44 causes the friction plate 64 and the clutch plate 65 to have an increased thickness, the position of the short push rod 92 in the clutch axial direction CA is substantially unchanged. Therefore, the automatic play adjusting mechanism 80 absorbs the shift of the touch point caused by the thermal expansion of the clutch 44. On the other hand, the position where the clutch 44 is disconnected is the position reached by the short push rod 92 after moving the prescribed play amount to the right in the clutch axial direction CA. The position is substantially unchanged if the thermal expansion of the clutch 44 causes the pressure plate 77 to move to the right in the clutch axial direction CA. More specifically, the disconnection start position for the clutch 44, in other words, the position of the touch point is substantially unchanged if the clutch 44 thermally expands. Therefore, with the clutch 44 according to the present embodiment, the shift of the touch point caused by thermal expansion can be reduced.

With the clutch 44 according to the present embodiment, when the thickness of the friction plate 64 or the clutch plate 65 is reduced because of wear, the pressure plate 77 is moved to the left in the clutch axial direction CA by the pushing force of the clutch spring 78. In a clutch connected state, however, the pressure plate 77 can move relative to the short push rod 92 by the automatic play adjusting mechanism 80 in the clutch axial direction CA. More specifically, when the thickness of the friction plate 64 or the clutch plate 65 is reduced by wear, the pressure plate 77 moves to the left in clutch axial direction CA relative to the short push rod 92. The position of the short push rod 92 in the clutch axial direction CA is substantially unchanged when the thickness of the friction plate 64 or the clutch plate 65 is reduced. Therefore, the automatic play adjusting mechanism 80 absorbs the shift of the touch point when the thickness of the friction plate 64 or the clutch plate 65 is reduced by wear. On the other hand, the position where the clutch 44 is disconnected corresponds to the position reached by the short push rod 92 after moving the prescribed play amount to the right in the clutch axial direction CA. The position is substantially unchanged when the pressure plate 77 moves to the left in the clutch axial direction CA by the wear of the plate group 66. More specifically, when the thickness of the friction plate 64 or the clutch plate 65 is reduced because of the wear, the disconnection start position for the clutch 44, in other words, the position of the touch point is substantially unchanged. Therefore, the clutch 44 according to the present embodiment allows the shift of the touch point caused by the wear of the plate group 66 to be reduced.

### Third Embodiment

According to each of the embodiments described above, the clutch 44 responds to the operation of the clutch lever 24 by the rider of the motorcycle 1 and the pressurized state of the plate group 66 is forcibly released. However, the clutch 44 may include an actuator. More specifically, the clutch 44 according to the present embodiment is disconnected in response to the operation of the actuator. The clutch 44 is disconnected in response to the manual operation of the clutch lever 24 (Fig. 1) by the rider or the operation of the actuator. In the following description, elements having the same effects as those of the described embodiment are designated by the same reference characters and their description will not be repeated.

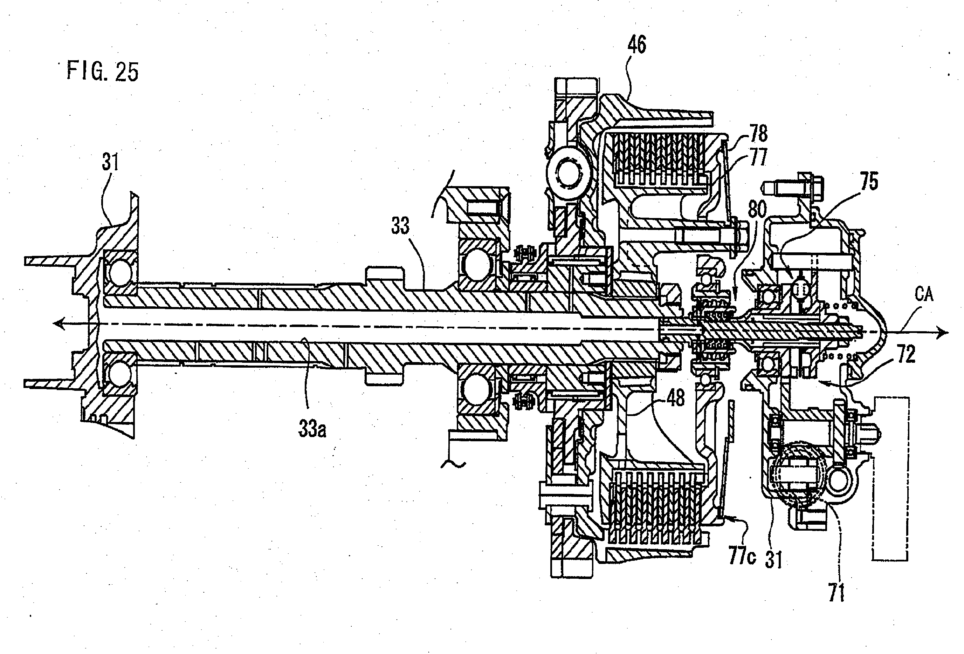

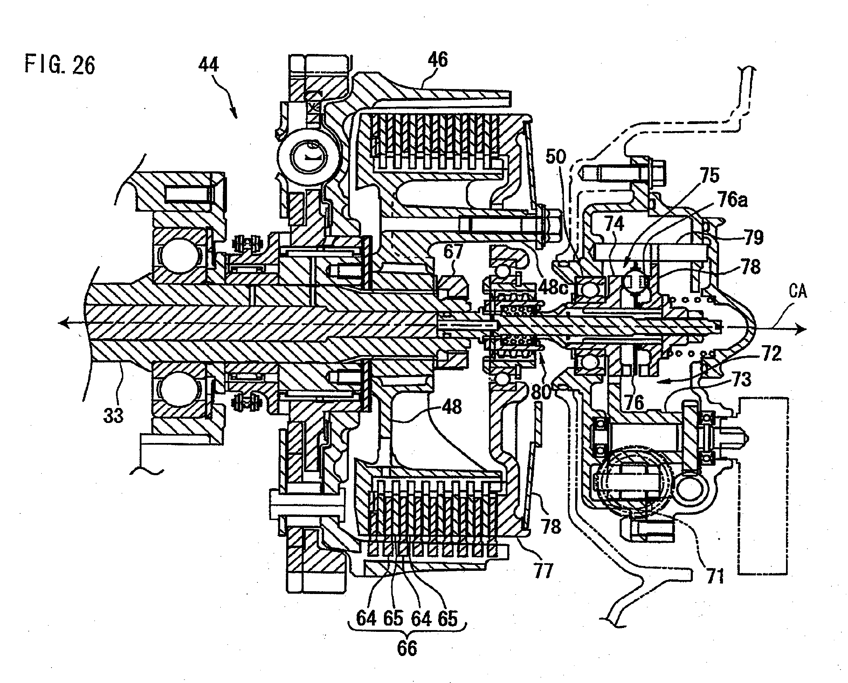

As shown in Fig. 25 or 26, the power unit 3 (Fig. 2) includes a clutch actuator 71 arranged to disconnect the clutch 44. The pressure plate 77 moves in the clutch axial direction CA in response to the driving of the clutch actuator 71. When the clutch 44 is connected, a rod 95 moves to the left in Fig. 25 and the pressure plate 77 also moves to the left. As a result, the pressure plate 77 has the friction plate 64 and the clutch plate 65 pressed against each other upon receiving the pushing force of the clutch spring 78. In this way, the clutch 44 attains a clutch connected state.

On the other hand, when the clutch 44 is disconnected, the rod 95 moves to the right in Fig. 25, and the pressure plate 77 moves to the right in Fig. 25 against the pushing force of the clutch spring 78. As a result, the friction plate 64 and the clutch plate 65 are released from the pressurized contacted state, so that the clutch 44 attains a clutch disconnected state.

In this way, depending on the magnitude of the driving force of the clutch actuator 71 and the pushing force of the clutch spring 78, the pressure plate 77 moves to one side or the other side in the clutch axial direction CA, and the clutch 44 is connected or disconnected in response to the movement.

The clutch actuator 71 is driven by the rider of the motorcycle 1 when an automatic transmission operation switch is operated. The automatic transmission operation switch is provided in a position easily operable by the rider. The automatic transmission operation switch is provided for example at the handle 12 (Fig. 1). When the automatic transmission operation switch is operated, a control unit (not shown) for the motorcycle 1 controls the clutch actuator 71, so that a series of operation for disconnection and connection for the clutch 44 is carried out.

As shown in Fig. 25, the clutch 44 is disconnected by the operation of an operation force transmission mechanism 72 coupled to the clutch actuator 71. The operation force transmission mechanism 72 includes a rotor 73 coupled to the clutch actuator 71, a rotor 74 engaged with the rotor 73, and a ball cam 75 arranged to convert the rotation force of the rotor 74 into force in the axial direction of the rod 95. The rotor 74 forms a part of the ball cam 75 according to the present embodiment. However, the rotor 74 may be discrete from the ball cam 75. The ball cam 75 includes a cam plate 78, a ball plate 76, and the rotor 74.

The cam plate 78 is fixed to the rod 95. Therefore, the cam plate 78 can move in the axial direction of the rod 95 together with the rod 95. The cam plate 78 however has its rotation around the rod 95 restricted by a stopper pin 79. The stopper pin 79 is attached at the crankcase 31.

The ball plate 76 supports three balls 76a arranged at equal intervals in the circumferential direction so that they can roll. The number of the balls 76a is not limited to three.

The rotor 74 is supported rotatably around the rod 95 by a bearing 50. On the other hand, the rotor 74 is arranged so that it does not move in the axial direction of the rod 95.

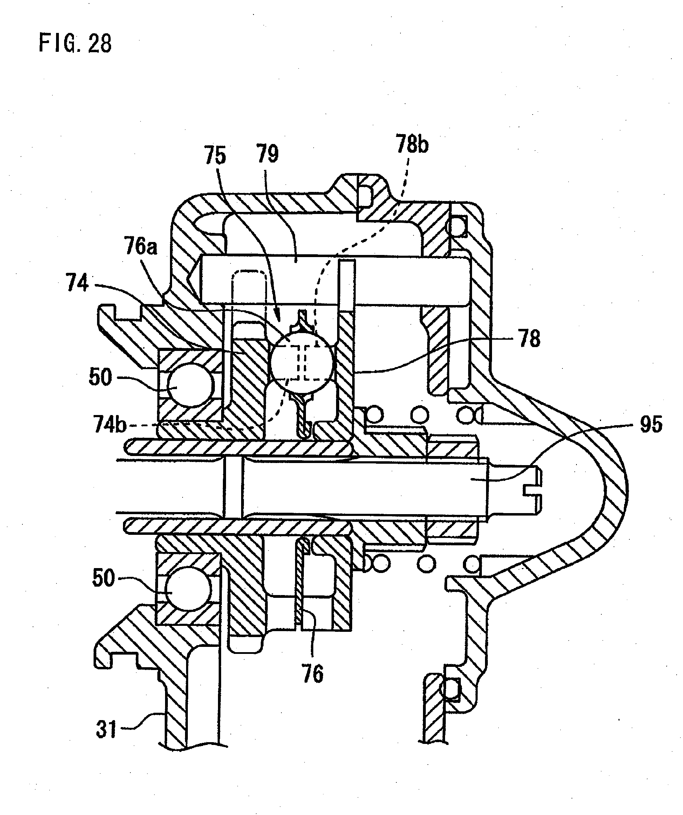

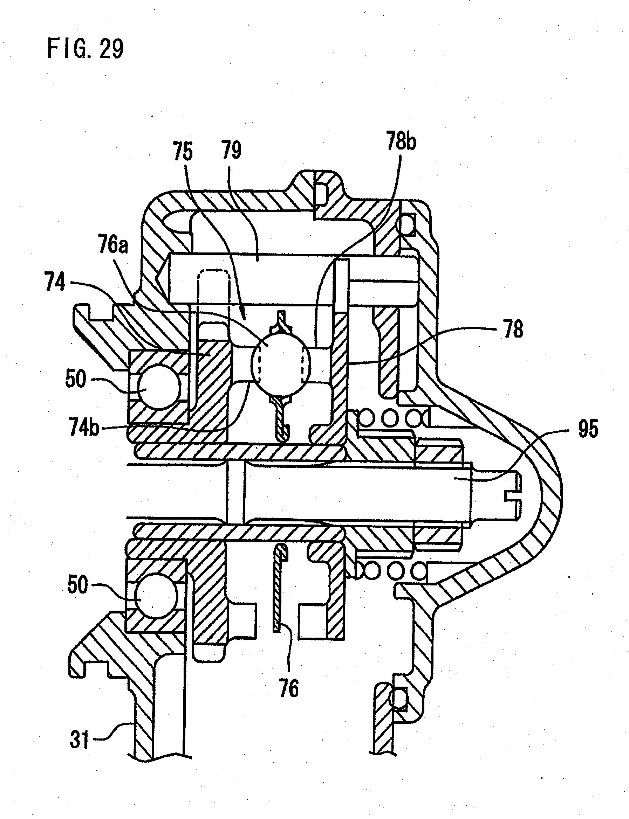

As shown in Fig. 28, a cam groove 78b and a cam groove 74b inclined along the circumference are formed at a surface on the left side of the cam plate 78 and a surface on the right side of the rotor 74, respectively. In this way, according to the present embodiment, the rotor 74 also functions as a cam plate. When the rotor 74 rotates, the relative position between the cam groove 78b of the cam plate 78 and the cam groove 74b of the rotor 74 is shifted, and the balls 76a are raised off of the cam grooves 78b and 74b. In this way, the cam plate 78 is pushed to the right by the ball 76a and slides to the right (Fig. 29). The rod 95 slides to the right and the pressure plate 77 moves to the right accordingly. As a result, the clutch 44 is switched from the connected state to the disconnected state.

Then, the operation of disconnecting and connecting the clutch 44 by the clutch actuator 71 will be described. When the clutch actuator 71 is driven, the rotor 73 rotates in a prescribed direction around the main shaft 33. Since the rotor 73 and the rotor 74 are engaged with each other, as the rotor 73 rotates in a prescribed direction, the rotor 74 rotates reversely to the prescribed direction.

When the clutch actuator 71 is further driven from the disconnection start position for the clutch 44, the rotor 73 further rotates in the prescribed direction. As the rotor 73 rotates, the rotor 74 further rotates reversely to the prescribed direction. Then, the ball 76a of the ball plate 76 of the ball cam 75 is slightly raised off the cam groove 78b of the cam plate 78 and the cam groove 74b of the rotor 74. As a result, the cam plate 78 is pushed out by the ball 76a in the direction to disconnect the clutch 44. More specifically, the cam plate 78 is pushed to the right in the clutch axial direction CA and moves to the right together with the rod 95. In this way, the pressure plate 77 moves to the right and the clutch 44 is disconnected. When the clutch 44 changes in a disconnected state to in a connected state, the operation opposite to the above-described operation is carried out.

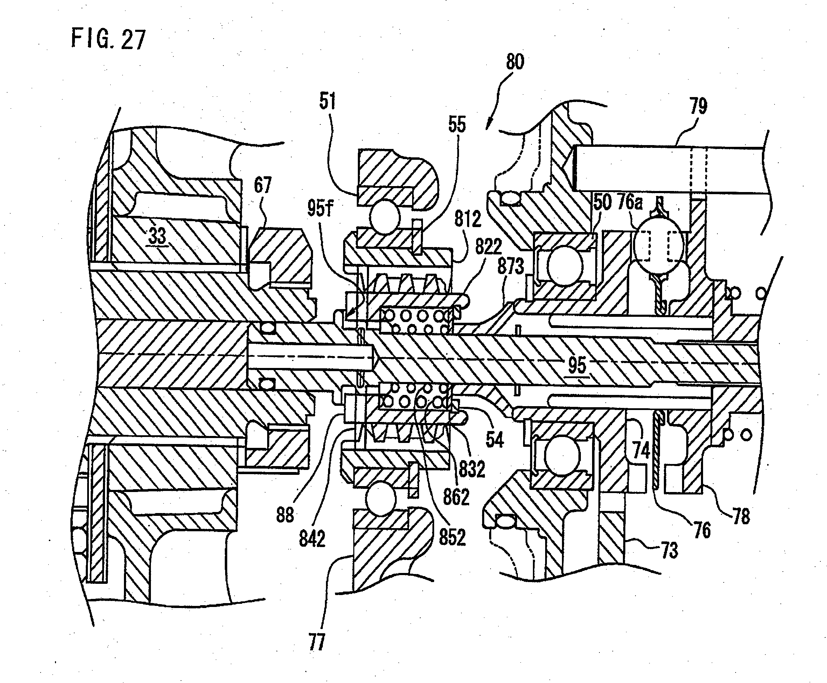

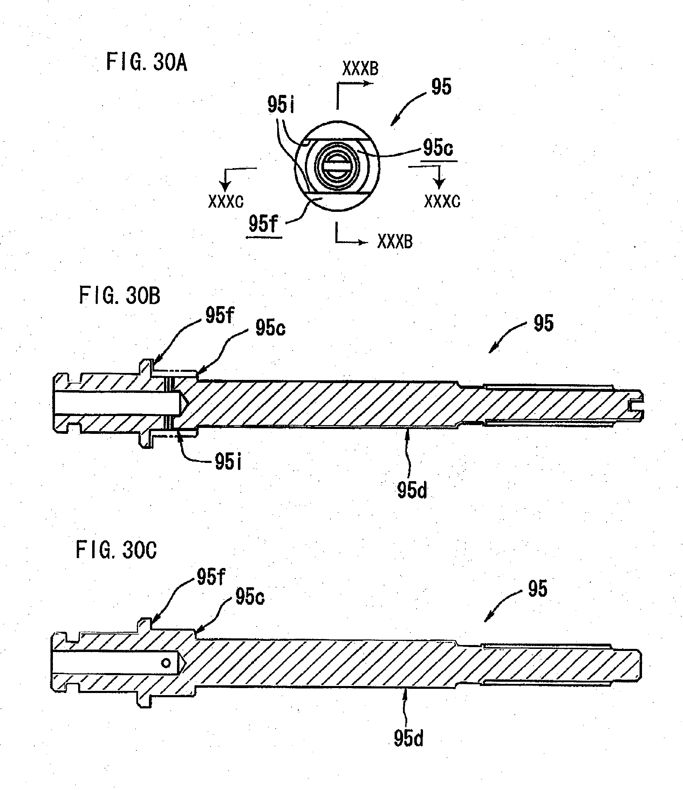

As shown in Figs. 30A to 30C, the rod 95 has a shaft portion 95d, a spring retainer 95c, and a pressurizing portion 95f. The shaft portion 95d extends approximately parallel to the axial direction of the main shaft 33 (Fig. 26 and other figures). The spring retainer 95c is a part of the shaft portion 95d having a large outer diameter. The pressurizing portion 95f is formed at the shaft portion 95d and extends in a flange shape radially outward on the left of the spring retainer 95c. A slide surface 95i is formed to have a flat shape between the pressurizing portion 95f and the spring retainer 95c of the shaft portion 95d in the clutch axial direction CA. The lock plate 842 (Fig. 27), the spacer 88 (Fig. 27), and a part of the inner pipe 822 move in the clutch axial direction CA relative to the rod 95 at the slide surface 95i. The part of the shaft portion 95d on the right of the pressurizing portion 95f penetrates through the lock plate 842, the auxiliary spring 852, the auxiliary spring 862, the slide plate 832, the collar 873, and the inner pipe 822 in the clutch axial direction CA.

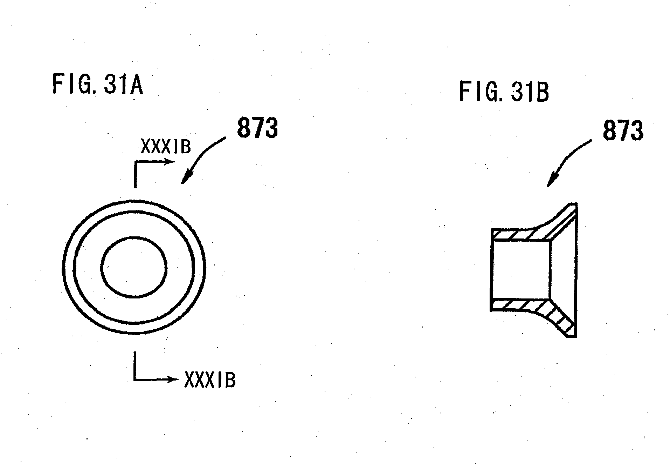

As shown in Fig. 27, the collar 873 is provided on the right of the auxiliary spring 862 and the slide plate 832 in the clutch axial direction CA. As shown in Figs. 31A and 31B, the collar 873 has an approximately cylindrical shape. At least a part of the left end of the collar 873 is stored in the inner pipe 822. The rod 95 penetrates through the collar 873. The collar 873 and the slide plate 83 slide in the inner pipe 822 when the rod 95 moves in the clutch axial direction CA.

As described above, the cam plate 78 is fixed to the rod 95 and can move in the axial direction of the rod 95 together with the rod 95. The cam plate 78 has its rotation around the rod 95 restricted by a stopper pin 79. The stopper pin 79 is attached at the crankcase 31. In this way, the rod 95 has its rotation around the shaft restricted.

Now, the operation of the automatic play adjusting mechanism 80 according to the present embodiment will be described. In a so-called clutch connected state, a gap forms between the left part of the lock plate 842 and the spacer 88 by the pushing force of the auxiliary spring 852 (Fig. 27). A gap also forms between the right part of the lock plate 842 and the pressurizing portion 822f (Fig. 20) at the left end of the inner pipe 822 by the pushing force of the auxiliary spring 852. More specifically, in a clutch connected state, the lock plate 842 is not pressed between the pressurizing portion 95f (Figs. 30A to 30C) of the rod 95 and the pressurizing portion 822f (Fig. 20) of the inner pipe 822.

When the rod 95 moves a prescribed play amount to the right in the clutch axial direction CA from the clutch connected state by the driving of the clutch actuator 71, this restricts the relative movement of the outer pipe 812 and the inner pipe 822 in the clutch axial direction CA. At the time, the pressurizing portion 95f (Figs. 30A to 30C) of the rod 95 is abutted against the left end surface of the spacer 88. As a result, the gap between the left part of the lock plate 842 and the spacer 88 is substantially eliminated. At the time, the gap between the right part of the lock plate 842 and the pressurizing portion 822f (Fig. 20) of the inner pipe 822 is also substantially eliminated. When the rod 95 moves a prescribed play amount to the right in the clutch axial direction CA and the relative movement of the outer pipe 812 and the inner pipe 822 in the clutch axial direction CA is restricted, the clutch 44 is in the touch point. In the touch point for the clutch 44, the lock plate 842 is pressed between the pressurizing portion 95f of the rod 95 and the pressurizing portion 822f (Fig. 20) of the inner pipe 822.

When the rod 95 moves more than the prescribed play amount to the right in the clutch axial direction CA (i.e., after the touch point), the relative movement of the pressure plate 77 to the rod 95 in the clutch axial direction CA is restricted. More specifically, after the touch point, the pressure plate 77 and the rod 95 move together to the right in the clutch axial direction CA. After the touch point, the slide plate 832 and the collar 873 move to the left in the clutch axial direction CA relative to the outer pipe 812, the inner pipe 822, the lock plate 842, and the rod 95.

When the rod 95 further moves a prescribed distance to the right in the clutch axial direction CA from the touch point for the clutch 44 by the driving of the touch actuator 71, a clutch disconnected state is attained. The pressure plate 77 and the rod 95 move together to the right in the clutch axial direction CA after the touch point until a clutch disconnected state is attained. The slide plate 830 and the collar 873 move to the left in the clutch axial direction CA relative to the outer pipe 812, the inner pipe 822, the lock plate 842, and the rod 95.

As in the foregoing, the clutch 44 according to the present embodiment includes an automatic play adjusting mechanism 80. The automatic play adjusting mechanism 80 is interposed between the pressure plate 77 and the rod 95, and in a clutch connected state where the friction plate 64 and the clutch plate 65 are pressed against each other, the pressure plate 77 is allowed to move relative to the rod 95 in the clutch axial direction CA. The automatic play adjusting mechanism 80 restricts the relative movement of the pressure plate 77 to the rod 95 in the clutch axial direction CA when the rod 95 moves more than the prescribed play amount to the right in the clutch axial direction CA from the clutch connected state.

When the clutch 44 according to the present embodiment is thermally expanded, the pressure plate 77 is pushed to the right in the clutch axial direction CA by the plate group 66, and the pressure plate 77 moves to the right in the clutch axial direction CA. In a clutch connected state, however, the pressure plate 77 can move relative to the rod 95 in the clutch axial direction CA by the automatic play adjusting mechanism 80. More specifically, if the thermal expansion of the clutch 44 increases the size (thickness) of the friction plate 64 and the clutch plate 65 in the clutch axial direction CA, the pressure plate 77 moves relative to the rod 95 to the right in the clutch axial direction CA. The position of the rod 95 is substantially unchanged in the clutch axial direction CA if the thickness of the friction plate 64 and the clutch plate 65 increases by the thermal expansion of the clutch 44. As a result, the automatic play adjusting mechanism 80 absorbs the shift of the touch point caused by the thermal expansion of the clutch 44 when the clutch 44 is thermally expanded. The clutch 44 is disconnected in the position reached by the rod 95 after moving the prescribed play distance to the right in the clutch axial direction CA. The position is substantially unchanged when the pressure plate 77 moves to the right in the clutch axial direction CA by the thermal expansion of the clutch 44. More specifically, when the clutch 44 is thermally expanded, the disconnection start position for the clutch 44, in other words, the position of the touch point is substantially unchanged. Therefore, with the clutch 44 according to the present embodiment, the shift of the touch point caused by the thermal expansion can be reduced.

With the clutch 44 according to the present embodiment, when the thickness of the friction plate 64 or the clutch plate 65 is reduced because of wear, the pressure plate 77 moves to the left in the clutch axial direction CA by the pushing force of the clutch spring 78. However, in a clutch connected state, the pressure plate 77 can move relative to the rod 95 in the clutch axial direction CA by the automatic play adjusting mechanism 80. When the thickness of the friction plate 64 or the clutch plate 65 is reduced because of wear, the pressure plate 77 moves to the left in the clutch axial direction CA relative to the rod 95. The position of the rod 95 in the clutch axial direction CA is substantially unchanged when the thickness of the friction plate 64 or the clutch plate 65 is reduced. As a result, the automatic play adjusting mechanism 80 absorbs the shift of the touch point if the thickness of the friction plate 64 or the clutch plate 65 is reduced because of wear. The clutch 44 is disconnected in the position reached by the rod 95 after moving the prescribed play amount to the right in the clutch axial direction CA. The position is substantially unchanged when the thickness of the friction plate 64 or the clutch plate 65 is reduced because of wear. In other words, when the thickness of the friction plate 64 or the clutch plate 65 is reduced because of wear, the disconnection start position for the clutch 44 or the position of the touch point is substantially unchanged. Therefore, with the clutch 44 according to the present embodiment, the shift of the touch point caused by the wear of the plate group 66 can be reduced.

## Claims

1. A clutch (44) having a connected state and a disconnected state, comprising:
a main shaft (33) arranged along a prescribed clutch axial direction (CA);
a friction plate (64) rotatably supported around the main shaft to rotate according to the rotation of a crankshaft;
a clutch plate (65) supported around the main shaft and opposed to the friction plate to rotate together with the main shaft;
a rod (91) arranged along the clutch axial direction and arranged to be moved to one side in the clutch axial direction in the disconnected state;
a pressure plate (77) rotatably supported around the rod;
a clutch spring (78) arranged to push the pressure plate to the other side in the clutch axial direction so that the friction plate (64) and the clutch plate(65) are rubbed against each other **characterized in that**
an automatic play adjusting mechanism (80) provided between the pressure plate (77) and the rod (91) to allow the pressure plate (77) to move relative to the rod (91) in the clutch axial direction in the connected state and restrict the movement of the pressure plate (77) relative to the rod (91) in the clutch axial direction in the disconnected state.

2. The clutch according to claim 1, wherein the automatic play adjusting mechanism comprises:
an inner pipe (82) mounted around the rod;
an outer pipe (81) mounted around the inner pipe (82) to support the pressure plate (77); and
a lock member (84) arranged to restrict the movement of the inner and outer pipes (81.82) relative to the rod (91) in the clutch axial direction in the disconnected state.

3. The clutch according to claim 2, wherein the automatic play adjusting mechanism further comprises:
a first auxiliary spring (85) arranged to push the inner pipe (82) relative to the rod (91) to one side in the clutch axial direction; and
a second auxiliary spring (86) arranged to push the inner pipe (82) relative to the rod (91) to the other side in the clutch axial direction.

4. The clutch according to claim 3, wherein
the outer pipe (81) comprises a screw groove (81d) and a screw thread (81e) on an inner circumferential surface thereof, and
the inner pipe (82) comprises a screw thread (82d) and a screw groove (82e) engaged with the screw groove (81d) and the screw thread (81e) of the outer pipe (81) on an outer circumferential surface thereof.

5. The clutch according to claim 4, wherein
the rod comprises a first pressurizing portion (91c),
the inner pipe (82) comprises a second pressurizing portion (82f) opposed to the first pressurizing portion (91c), and
the lock member (84) comprises a lock plate (84) arranged between the first and second pressurizing portions and attached unrotatably relative to the outer pipe and movably in the clutch axial direction.

6. The clutch according to claim 3, wherein
the rod (91) comprises a first spring retainer (91c) arranged to receive one end of the first auxiliary spring,
the inner pipe (82) comprises:
a second spring retainer (82b) arranged to receive the other end of the first auxiliary spring (85); and
a third spring retainer (82c) arranged to receive one end of the second auxiliary spring (86),
the clutch further comprising:
a slide plate (83) movably attached relative to the rod in the clutch axial direction, and
the slide plate (83) comprises a fourth spring retainer (83b) arranged to receive the other end of the second auxiliary spring (86).

7. The clutch according to claim 3, wherein
the rod (91) comprises a fifth spring retainer (95c) arranged to receive one end of the first auxiliary spring (85),
the inner pipe (82) comprises a sixth spring retainer (822b) arranged to receive one end of the second auxiliary spring (86),
the clutch further comprising:
a slide plate (832) movably attached relative to the rod in the clutch axial direction, and
the slide plate (832) comprises a seventh spring retainer (832b) arranged to receive the other ends of the first and second auxiliary springs (82,86).

8. The clutch according to claim 2, further comprising:
a bearing (51) provided between the pressure plate and the outer pipe, the pressure plate being supported rotatably by the outer pipe through the bearing.

9. The clutch according to claim 1, wherein
the rod comprises a pull rod (91) arranged on one side of the main shaft (33) and substantially coaxially with the main shaft (33),
the clutch further comprising a clutch release mechanism (95) arranged to pull the pull rod (91) in the disconnected state.

10. The clutch according to claim 1, wherein the main shaft (33) comprises a through hole (33a) arranged to extend in the clutch axial direction, and
the rod comprises a push rod (92) inserted in the through hole (33a), the push rod (92) having one end projected from the main shaft (33),
the clutch further comprising:
a clutch release mechanism (96) arranged to push the push rod (92) in the disconnected state.

11. The clutch according to claim 1, further comprising:
a clutch housing (46) rotatably supported around the main shaft and arranged to support the friction plate (64); and
a clutch boss (48) supported by the main shaft (33) and arranged to rotate together with the main shaft and arranged to support the clutch plate (65).

12. The clutch according to claim 1, wherein
a plurality of the friction plates and a plurality of the clutch plates are placed alternately on one another.

13. A power unit, comprising the clutch according to one of claims 1 to 12.

14. A vehicle, comprising the clutch according to one of claims 1 to 12.

15. The vehicle according to claim 14, further comprising:
a clutch operator (24) operated by a driver and arranged to move the rod against the pushing force of the clutch spring.

## Patentansprüche

1. Eine Kupplung (44) mit einem verbundenen Zustand und einem getrennten Zustand, die folgende Merkmale aufweist:
eine Hauptwelle (33), die entlang einer vorgeschriebenen Kupplungsaxialrichtung (CA) angeordnet ist;
eine Reibungsplatte (64), die drehbar um die Hauptwelle getragen wird, um sich gemäß der Drehung einer Kurbelwelle zu drehen;
eine Kupplungsscheibe (65), die um die Hauptwelle herum getragen wird und der Reibungsplatte gegenüberliegt, um sich zusammen mit der Hauptwelle zu drehen;
eine Stange (91), die entlang der Kupplungsaxialrichtung angeordnet ist und angeordnet ist, um in dem getrennten Zustand in der Kupplungsaxialrichtung zu einer Seite bewegt zu werden;
eine Druckplatte (77), die drehbar um die Stange herum getragen wird;
eine Kupplungsfeder (78), die angeordnet ist, um die Druckplatte in der Kupplungsaxialrichtung zu der anderen Seite zu schieben, sodass die Reibungsplatte (64) und die Kupplungsscheibe (65) gegeneinander gerieben werden, **dadurch gekennzeichnet, dass**
ein automatischer Spieleinstellmechanismus (80), der zwischen der Druckplatte (77) und der Stange (91) vorgesehen ist, um es der Druckplatte (77) zu ermöglichen, sich in dem verbundenen Zustand relativ zu der Stange (91) in der Kupplungsaxialrichtung zu bewegen, und die Bewegung der Druckplatte (77) relativ zu der Stange (91) in der Kupplungsaxialrichtung in dem getrennten oder gelösten Zustand zu beschränken.

2. Die Kupplung gemäß Anspruch 1, bei der der automatische Spieleinstellmechanismus folgende Merkmale aufweist:
ein Innenrohr (82), das um die Stange herum befestigt ist;
ein Außenrohr (81), das um das Innenrohr (82) herum befestigt ist, um die Druckplatte (77) zu tragen; und
ein Verriegelungsbauglied (84), das angeordnet ist, um die Bewegung des Innen- und Außenrohrs (81, 82) relativ zu der Stange (91) in der Kupplungsaxialrichtung in dem getrennten Zustand zu beschränken.

3. Die Kupplung gemäß Anspruch 2, bei der der automatische Spieleinstellmechanismus ferner folgende Merkmale aufweist:
eine erste Hilfsfeder (85), die angeordnet ist, um das Innenrohr (82) relativ zu der Stange (91) in der Kupplungsaxialrichtung zu einer Seite zu schieben; und
eine zweite Hilfsfeder (86), die angeordnet ist, um das Innenrohr (82) relativ zu der Stange (91) in der Kupplungsaxialrichtung zu der anderen Seite zu schieben.

4. Die Kupplung gemäß Anspruch 3, bei der
das Außenrohr (81) eine Schraubrille (81d) und ein Schraubgewinde (81 e) auf einer Innenumfangsoberfläche desselben aufweist, und
das Innenrohr (82) ein Schraubgewinde (82d) und eine Schraubrille (82e) aufweist, die mit der Schraubrille (81 d) und dem Schraubgewinde (81 e) des Außenrohrs (81) auf einer Außenumfangsoberfläche desselben in Eingriff sind.

5. Die Kupplung gemäß Anspruch 4, bei der
die Stange einen ersten Druckbeaufschlagungsabschnitt (91 c) aufweist,
das Innenrohr (82) einen zweiten Druckbeaufschlagungsabschnitt (82f) gegenüber dem ersten Druckbeaufschlagungsabschnitt (91 c) aufweist, und
das Verriegelungsbauglied (84) eine Verriegelungsplatte (84) aufweist, die zwischen dem ersten und zweiten Druckbeaufschlagungsabschnitt angeordnet ist und undrehbar relativ zu dem Außenrohr und bewegbar in der Kupplungsaxialrichtung angebracht ist.

6. Die Kupplung gemäß Anspruch 3, bei der
die Stange (91) einen ersten Federhalter (91 c) aufweist, der angeordnet ist, um ein Ende der ersten Hilfsfeder aufzunehmen,
das Innenrohr (82) folgende Merkmale aufweist:
einen zweiten Federhalter (82b), der angeordnet ist, um das andere Ende der ersten Hilfsfeder (85) aufzunehmen; und
einen dritten Federhalter (82c), der angeordnet ist, um ein Ende der zweiten Hilfsfeder (86) aufzunehmen,
wobei die Kupplung ferner folgende Merkmale aufweist:
eine Gleitplatte (83), die relativ zu der Stange in der Kupplungsaxialrichtung bewegbar angebracht ist, und
die Gleitplatte (83) ferner einen vierten Federhalter (83b) aufweist, der angeordnet ist, um das andere Ende der zweiten Hilfsfeder (86) aufzunehmen.

7. Die Kupplung gemäß Anspruch 3, bei der
die Stange (91) einen fünften Federhalter (95c) aufweist, der angeordnet ist, um ein Ende der ersten Hilfsfeder (85) aufzunehmen,
das Innenrohr (82) einen sechsten Federhalter (822b) aufweist, der angeordnet ist, um ein Ende der zweiten Hilfsfeder (86) aufzunehmen;
wobei die Kupplung ferner folgende Merkmale aufweist:
eine Gleitplatte (832), die relativ zu der Stange in der Kupplungsaxialrichtung bewegbar angebracht ist, und
die Gleitplatte (832) einen siebten Federhalter (832b) aufweist, der angeordnet ist, um die anderen Enden der ersten und zweiten Hilfsfeder (82, 86) aufzunehmen.

8. Die Kupplung gemäß Anspruch 2, die ferner folgende Merkmale aufweist:
ein Lager (51), das zwischen der Druckplatte und dem Außenrohr vorgesehen ist, wobei die Druckplatte durch das Außenrohr über das Lager drehbar getragen wird.

9. Die Kupplung gemäß Anspruch 1, bei der
die Stange eine Zugstange (91) aufweist, die auf einer Seite der Hauptwelle (33) und im Wesentlichen koaxial mit der Hauptwelle (33) angeordnet ist,
wobei die Kupplung ferner einen Kupplungsausrückmechanismus (95) aufweist, der angeordnet ist, um die Zugstange in den getrennten Zustand zu ziehen.

10. Die Kupplung gemäß Anspruch 1, bei der die Hauptwelle (33) ein Durchgangsloch (33a) aufweist, das angeordnet ist, um sich in der Kupplungsaxialrichtung zu erstrecken, und
die Stange eine Schubstange (92) aufweist, die in das Durchgangsloch (33a) eingefügt ist, wobei ein Ende der Zugstange (92) von der Hauptwelle (33) vorsteht,
wobei die Kupplung ferner folgende Merkmale aufweist:
eine Kupplungsausrückmechanismus (96), der angeordnet ist, um die Schubstange (92) in den getrennten Zustand zu schieben.

11. Die Kupplung gemäß Anspruch 1, die ferner folgende Merkmale aufweist:
ein Kupplungsgehäuse (46), das drehbar um die Hauptwelle getragen wird und angeordnet ist, um die Reibungsplatte (64) zu tragen; und
ein Kupplungsvorsprung (48), der durch die Hauptwelle (33) herum getragen wird und angeordnet ist, um sich zusammen mit der Hauptwelle zu drehen und angeordnet ist, um die Kupplungsscheibe (65) zu tragen.

12. Die Kupplung gemäß Anspruch 1, bei der
eine Mehrzahl der Reibungsplatten und eine Mehrzahl der Kupplungsscheiben abwechselnd aufeinander platziert sind.

13. Eine Leistungseinheit, die die Kupplung gemäß einem der Ansprüche 1 bis 12 aufweist.

14. Ein Fahrzeug, das die Kupplung gemäß einem der Ansprüche 1 bis 12 aufweist.

15. Das Fahrzeug gemäß Anspruch 14, das ferner folgende Merkmale aufweist:
einen Kupplungsschalter (24), der durch einen Fahrer bedient wird und angeordnet ist, um die Stange gegen die Schubkraft der Kupplungsfeder zu bewegen.

## Revendications

1. Embrayage (44) présentant un état connecté et un état déconnecté, comprenant:
un arbre principal (33) disposé selon une direction axiale de l'embrayage prescrite (CA);
un disque de friction (64) supporté en rotation autour de l'arbre principal, pour tourner selon la rotation d'un vilebrequin;
un disque d'embrayage (65) supporté autour de l'arbre principal et opposé au disque de friction, pour tourner ensemble avec l'arbre principal;
une tige (91) disposée selon la direction axiale de l'embrayage et aménagée de manière à se déplacer d'un côté dans la direction axiale de l'embrayage à l'état déconnecté;
un disque de pression (77) supporté en rotation autour de la tige;
un ressort d'embrayage (78) aménagé de manière à pousser le disque de pression de l'autre côté dans la direction axiale de l'embrayage de sorte que le disque de friction (64) et le disque d'embrayage (65) frottent l'un contre l'autre,
**caractérisé par le fait que**
un mécanisme de réglage de jeu automatique (80) est prévu entre le disque de pression (77) et la tige (91) pour permettre que laedisque de pression (77) se déplace par rapport à la tige (91) dans la direction axiale de l'embrayage à l'état connecté et limite le mouvement du disque de pression (77) par rapport à la tige (91) dans la direction axiale de l'embrayage à l'état déconnecté.

2. Embrayage selon la revendication 1, dans lequel le mécanisme de réglage de jeu automatique comprend:
un tube intéri.eur (82) monté autour de la tige;
un tube extérieur (81) monté autour du tube intérieur (82), pour supporter le disque de pression (77); et
un élément de verrouillage (84) aménagé de manière à limiter le mouvement des tubes intérieur et extérieur (81, 82) par rapport à la tige (91) dans la direction axiale de l'embrayage à l'état déconnecté.

3. Embrayage selon la revendication 2, dans lequel le mécanisme de réglage de jeu automatique comprend par ailleurs:
un premier ressort auxiliaire (85) aménagé de manière à pousser le tube intérieur (82) par rapport à la tige (91) d'un côté dans la direction axiale de l'embrayage; et
un deuxième ressort auxiliaire (86) aménagé de manière à pousser le tube intérieur (82) par rapport à la tige (91) de l'autre côté dans la direction axiale de l'embrayage.

4. Embrayage selon la revendication 3, dans lequel
le tube extérieur (81) comprend une rainure à vis (81d) et un filet de vis (8LE) sur une surface circonférentielle intérieure de ce dernier, et
le tube intérieur (82) comprend un filet de vis (82d) et une rainure à vis (82e) en prise avec la rainure à vis (81d) et le filet de vis (81e) du tube extérieur (81) sur une surface circonférentielle extérieure de ce dernier.

5. Embrayage selon la revendication 4, dans lequel la tige comporte une première partie de pressurisation (91c),
le tube intérieur (82) comprend une deuxième partie de pressurisation (82f) opposée à la première partie de pressurisation (91c), et
l'élément de verrouillage (84) comprend un disque de verrouillage (84) disposé entre les première et deuxième parties de pressurisation et fixée de manière immobilisée en rotation par rapport au tube extérieur et de manière déplaçable dans la direction axiale de l'embrayage.

6. Embrayage selon la revendication 3, dans lequel
la tige (91) comprend un premier moyen de retenue de ressort (91c) aménagé pour recevoir une extrémité du premier ressort auxiliaire,
le tube intérieur (82) comprend:
un deuxième moyen de retenue de ressort (82b) aménagé pour recevoir l'autre extrémité du premier ressort auxiliaire (85); et
un troisième moyen de retenue de ressort (82c) aménagé pour recevoir une extrémité du deuxième ressort auxiliaire (86),
l'embrayage comprenant par ailleurs:
un disque de coulissement (83) fixé de manière mobile par rapport à la tige dans la direction axiale de l'embrayage, et
le disque de coulissement (83) comprend un quatrième moyen de retenue de ressort (83b) aménagé pour recevoir l'autre extrémité du deuxième ressort auxiliaire (86).

7. Embrayage selon la revendication 3, dans lequel
la tige (91) comprend un cinquième moyen de retenue de ressort (95c) aménagé pour recevoir une extrémité du premier ressort auxiliaire (85),
le tube intérieur (82) comprend un sixième moyen de retenue de ressort (822B) aménagé pour recevoir une extrémité du deuxième ressort auxiliaire (86),
l'embrayage comprenant par ailleurs:
un disque de coulissement (832) fixé de manière mobile par rapport à la tige dans la direction axiale de l'embrayage, et
le disque de coulissement (832) comprend un septième moyen de retenue de ressort (832b) aménagé pour recevoir les autres extrémités des premier et deuxième ressorts auxiliaires (82, 86).

8. Embrayage selon la revendication 2, comprenant par ailleurs:
un roulement (51) prévu entre le disque de pression et le tube extérieur, le disque de pression étant supporté en rotation par le tube extérieur à travers le roulement.

9. Embrayage selon la revendication 1, dans lequel
la tige comprend une tige de traction (91) disposée d'un côté de l'arbre principal (33) et sensiblement coaxialement à l'arbre principal (33),
l'embrayage comprenant par ailleurs un mécanisme de débrayage (95) aménagé de manière à tirer la tige de traction (91) à l'état déconnecté.

10. Embrayage selon la revendication 1, dans lequel l'arbre principal (33) comprend un trou traversant (33a) aménagé de manière à s'étendre dans la direction axiale de l'embrayage, et
la tige comprend une tige de poussée (92) introduite dans le trou traversant (33a), la tige de poussée (92) présentant une extrémité ressortant de l'arbre principal (33),
l'embrayage comprenant par ailleurs:
un mécanisme de débrayage (96) aménagé pour pousser la tige de poussée (92) à l'état déconnecté.

11. Embrayage selon la revendication 1, comprenant par ailleurs:
un carter d'embrayage (46) supporté en rotation autour de l'arbre principal et aménagé de manière à supporter le disque de friction (64); et
un moyeu d'embrayage (48) supporté par l'arbre principal (33) et aménagé pour tourner ensemble avec l'arbre principal et disposé de manière à supporter le disque d'embrayage (65).

12. Embrayage selon la revendication 1, dans lequel
une pluralité de disques de friction et une pluralité de disques d'embrayage sont placés en alternance l'un sur l'autre.

13. Groupe moteur, comprenant l'embrayage selon l'une des revendications 1 à 12.

14. Véhicule, comprenant l'embrayage selon l'une des revendications 1 à 12.

15. Véhicule selon la revendication 14, comprenant par ailleurs:
un actionneur d'embrayage (24) actionné par un conducteur et aménagé de manière à déplacer la tige à l'encontre de la force de poussée du ressort d'embrayage.
